(19) Europäisches Patentamt / European Patent Office / Office européen des brevets

(11) **EP 4 746 360 A1**

(12) **EUROPEAN PATENT APPLICATION**
published in accordance with Art. 153(4) EPC

(43) Date of publication:
**20.05.2026 Bulletin 2026/21**

(21) Application number: **24850865.7**

(22) Date of filing: **30.07.2024**

(51) International Patent Classification (IPC):
**H04L 27/26** (2006.01)

(52) Cooperative Patent Classification (CPC):
**H04L 27/26**

(86) International application number:
**PCT/CN2024/108548**

(87) International publication number:
**WO 2025/031217 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.08.2023 CN 202310980659**
**27.09.2023 CN 202311288117**
**26.07.2024 CN 202411025343**

(71) Applicant: **Huawei Technologies Co., Ltd.**
**Shenzhen, Guangdong 518129 (CN)**

(72) Inventors:
• **XIN, Rui**
  **Shenzhen, Guangdong 518129 (CN)**
• **LIU, Mengting**
  **Shenzhen, Guangdong 518129 (CN)**
• **ZHANG, Li**
  **Shenzhen, Guangdong 518129 (CN)**
• **GAO, Xin**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS**

(57) This application discloses a communication method and apparatus, which may be applied to a scenario in which a receive end receives a reference signal from a transmit end in a frequency hopping manner. The method includes: A network device sends a reference signal in a first time unit in a first frequency hopping unit, where the first frequency hopping unit includes the first time unit and first switching time, the first time unit is used to transmit the reference signal, and the first time unit and the first switching time do not overlap in time domain; and the terminal device receives the reference signal in the first time unit. According to the method, the terminal device receives reference signals from the network device in a frequency hopping manner, to reduce a waste of reference signal resources. In addition, the reference signals from the network device can be received through many times of frequency hopping, increasing receive bandwidth of the received reference signals.

FIG. 4

**Description**

CROSS-REFERENCE TO RELATED APPLICATIONS

This application claims priority to Chinese Patent Application No. 202310980659.7, filed with the China National Intellectual Property Administration on August 4, 2023 and entitled "COMMUNICATION METHOD AND APPARATUS", which is incorporated herein by reference in its entirety.

This application claims priority to Chinese Patent Application No. 202311288117.X, filed with the China National Intellectual Property Administration on September 27, 2023 and entitled "COMMUNICATION METHOD AND APPARATUS", which is incorporated herein by reference in its entirety.

This application claims priority to Chinese Patent Application No. 202411025343.3, filed with the China National Intellectual Property Administration on July 26, 2024 and entitled "COMMUNICATION METHOD AND APPARATUS", which is incorporated herein by reference in its entirety.

TECHNICAL FIELD

Embodiments of this application relate to the communication field, and in particular, to a communication method and apparatus.

BACKGROUND

To increase bandwidth of a reference signal, a terminal device may receive reference signals from a network device in a frequency hopping manner. The terminal device superimposes the reference signals received through a plurality of times of frequency hopping, to implement an effect of "large bandwidth".

The terminal device needs to perform switching (also referred to as frequency switching/radio frequency switching) when receiving the reference signals in the frequency hopping manner, which takes specific duration. Some reference signal resources may be interrupted due to the switching performed by the terminal device, rendering these reference signals invalid, and resulting in a waste of reference signal resources.

SUMMARY

Embodiments of this application provide a communication method and apparatus, to reduce a waste of reference signal resources when a receive end receives a reference signal from a transmit end in a frequency hopping manner.

To achieve the foregoing objectives, the following technical solutions are used in embodiments of this application.

According to a first aspect, an embodiment of this application provides a communication method, which may be performed by a first communication apparatus. The first communication apparatus may be a terminal device. Alternatively, the first communication apparatus is a component configured to implement a function of the terminal device. For example, the first communication apparatus is a unit/module, a circuit, or a chip in the terminal device. The following describes the method provided in the first aspect by using an example in which the first communication apparatus is the terminal device.

The communication method includes: The terminal device determines a first frequency hopping unit, where the first frequency hopping unit includes a first time unit and first switching time, the first time unit is used to transmit a reference signal, and the first time unit and the first switching time do not overlap in time domain; and the terminal device receives the reference signal in the first time unit.

Correspondingly, according to a second aspect, an embodiment of this application provides a communication method, which may be performed by a second communication apparatus. The second communication apparatus may be a network device. Alternatively, the first communication apparatus is a component configured to implement a function of the network device. For example, the second communication apparatus is a unit/module, a circuit, or a chip in the network device. The following describes the method provided in the second aspect by using an example in which the second communication apparatus is the network device.

The communication method includes: The network device sends a reference signal in a first time unit in a first frequency hopping unit, where the first frequency hopping unit includes the first time unit and first switching time, the first time unit is used to transmit the reference signal, and the first time unit and the first switching time do not overlap in time domain. Optionally, before sending the reference signal, the network device determines the first frequency hopping unit. Optionally, before sending the reference signal, the network device generates the reference signal.

The first frequency hopping unit may be understood as a unit frequency hopping unit, and a terminal device may perform frequency hopping by using the first frequency hopping unit as a unit, which is alternatively understood as that the terminal device performs frequency hopping or frequency switching at most once in the first frequency hopping unit. The first switching time may be used by the terminal device to perform frequency switching. The first frequency hopping unit includes a time unit (that is, the first time unit) used to transmit the reference signal and a time (that is, the first switching time) used by the terminal device to perform frequency switching. The network device sends the reference signal in the first time unit in the first frequency hopping unit, or does not send the reference signal in the first switching time; and the terminal device receives the reference signal in the first time unit, and performs frequency switching in the first switching time when frequency switching is required. The first time unit and the first switching time do not overlap in time domain. In this case, there is no reference signal in the first switching time. Therefore, receiving of the reference signal is not interrupted when the terminal device performs frequency switching, reducing a waste of reference signal resources. Because receiving of the reference signal is not interrupted, a quantity of times that the terminal device can perform frequency hopping in a time domain resource does not decrease, increasing receive bandwidth of the reference signal.

In a possible implementation of the first aspect or the second aspect, the first switching time is used by the terminal device to switch from a first frequency to a second frequency. Alternatively, the first switching time includes switching time of the terminal device. The switching time includes a time for which the terminal device is switched from a current frequency to a frequency that needs to be measured. Alternatively, the switching time is a period of time. In the period of time, the terminal device stops receiving a reference signal at one frequency, and switches to another frequency and receives another reference signal at the another frequency.

The terminal device performs frequency switching in the first switching time. Because the first switching time and the time unit used to transmit the reference signal do not overlap in time domain, the method can avoid interruption of receiving of a reference signal due to frequency switching.

In a possible implementation of the first aspect or the second aspect, receiving the reference signal in the first time unit includes: receiving the reference signal at the first frequency in the first time unit; and the method further includes: receiving the reference signal at the second frequency in a second time unit, where the second time unit is included in a second frequency hopping unit, and the second time unit is used to transmit the reference signal.

Same as the first frequency hopping unit, the second frequency hopping unit is also a frequency hopping unit. After receiving the reference signal in the first frequency hopping unit, the terminal device may switch from the first frequency to the second frequency, and receive the reference signal at the second frequency in the second time unit in the second frequency hopping unit. The terminal device receives reference signals at different frequencies in different frequency hopping units, and the reference signals received on the plurality of frequency hopping units are superimposed, so that receive bandwidth of the reference signals can be larger.

In a possible implementation of the first aspect or the second aspect, the second frequency hopping unit further includes second switching time, and the second switching unit and the second time unit do not overlap in time domain.

In a possible implementation of the first aspect or the second aspect, the first frequency hopping unit belongs to one of N frequency hopping units in a time window, and the first frequency hopping unit belongs to one of the N frequency hopping units in the time window.

The time window is a period of time, and the time window may be a time window in which the terminal device processes/measures a reference signal. One time window may include a plurality of frequency hopping units. Correspondingly, the terminal device may perform frequency hopping for a plurality of times in one time window, so that receive bandwidth of the reference signal is larger.

In a possible implementation of the first aspect or the second aspect, a last frequency hopping unit in the N frequency hopping units includes only a time unit used to transmit a reference signal; or a last frequency hopping unit in the N frequency hopping units does not include switching time.

If switching time of a frequency hopping unit overlaps or is adjacent to switching time of the time window, the switching time of the frequency hopping unit may overlap the switching time of the time window. For example, switching time adjacent to that of the last frequency hopping unit in the time window includes switching time close to that of the last frequency hopping unit in the time window, or switching time adjacent to that of the last frequency hopping unit in the time window is located in switching time close to that of the last frequency hopping unit in the time window.

In a possible implementation of the first aspect or the second aspect, duration of the first time unit may be defined in a protocol. For example, the first time unit may be F symbols, and F is an integer greater than or equal to 1. For another example, the first time unit may be F symbols, and F is determined based on a length of the first frequency hopping unit and/or the first switching time.

For example, F satisfies: F=floor(length of the first frequency hopping unit-first switching time), where floor is rounding down; or F satisfies: F=length of the first frequency hopping unit-first switching time; or F satisfies: F=length of the first frequency hopping unit-ceil(first switching time), where ceil is rounding up. In this case, the terminal device may define and store the duration of the first time unit based on the protocol. Certainly, the duration of the first time unit may also be configured by using signaling.

Optionally, a length of the first time unit may be defined based on the switching time, or a length of the first time unit is related to the switching time, so that there is sufficient time in one frequency hopping unit to complete frequency switching.

In a possible implementation of the first aspect or the second aspect, the length of the first frequency hopping unit or a periodicity of the first frequency hopping unit may be predefined. Alternatively, the length of the first frequency hopping unit or a periodicity of the first frequency hopping unit may be determined based on one or more of the following: a processing capability of the terminal device; a storage capability of the terminal device; switching time of the terminal device; a repetition interval of the reference signal, where the repetition interval is a time interval between two adjacent repeated transmissions; a subcarrier spacing of the reference signal; or a time interval between different hops of the reference signal.

The terminal device may determine the length of the first frequency hopping unit or the periodicity of the first frequency hopping unit based on one or more of the foregoing information, so that the time window can be divided into a plurality of appropriate frequency hopping units, thereby maximizing receive bandwidth of the reference signal as much as possible.

In a possible implementation of the first aspect or the second aspect, the length of the first frequency hopping unit or the periodicity of the first frequency hopping unit is: a repetition interval of the reference signal, the repetition interval of the reference signal plus 1, or a maximum value of the repetition interval of the reference signal, where the repetition interval is a quantity of slots between two adjacent repeated transmissions.

In this solution, the terminal device may determine the length of the first frequency hopping unit or the periodicity of the first frequency hopping unit based on a configuration of the reference signal, and no additional signaling configuration is required, reducing signaling overheads.

In a possible implementation of the first aspect or the second aspect, the length of the first frequency hopping unit is a periodicity of the first frequency hopping unit, so that a quantity of frequency hopping units in the time window is maximized, thereby saving reference signal resources to a maximum extent.

In a possible implementation of the first aspect or the second aspect, a start location of the first frequency hopping unit in the time window is predefined, or a start location of the first frequency hopping unit in the time window is determined based on the configuration of the reference signal.

The first frequency hopping unit may be a 1st frequency hopping unit or a last frequency hopping unit in the time window. A location of each frequency hopping unit in the time window may be determined by using the start location of the first frequency hopping unit in the time window.

Optionally, a start location of a 1st frequency hopping unit in the time window is a start location of the time window, or there is first duration between a start location of a 1st frequency hopping unit in the time window and a start location of the time window. The first duration may be predefined or configured by using signaling.

For example, the first duration is related to a resource configuration of the reference signal. The resource configuration may include one or more of the following: a quantity of symbols, a pilot spacing, a quantity of repetitions of the reference signal, the repetition interval of the reference signal, a resource-expected reference signal time difference (reference signal time difference, RSTD), or a resource-expected reference signal time difference uncertainty (expectedRSTD uncertainty).

In a possible implementation of the first aspect or the second aspect, N is predefined; N is related to a frequency hopping capability of the terminal device; N is determined based on an effective length of the time window and the length of the first frequency hopping unit; or N is determined based on an effective length of the time window, a length of the first time unit, and the length of the first frequency hopping unit. The effective length of the time window is the time window minus switching time of the time window.

In this solution, the quantity N of frequency hopping units included in the time window is specified. Optionally, a maximum value NhopMax of N is related to the effective length of the time window and the length of the first frequency hopping unit. For example, NhopMax satisfies: NhopMax=floor((effective length of the time window-length of the first time unit)/length of the first frequency hopping unit)+1, where floor is rounding down; or NhopMax=floor(effective length of the time window/length of the first frequency hopping unit), where floor is rounding down.

In a possible implementation of the first aspect or the second aspect, the reference signal is a positioning reference signal.

In a possible implementation of the first aspect or the second aspect, a quantity of hops of the terminal device in the time window does not exceed N.

In a possible implementation of the first aspect or the second aspect, the quantity $N_{hop}$ of hops of the terminal device in the time window is related to one or more of the following: N; a maximum or minimum quantity of times that a reference signal resource falls within the N frequency hopping units; a quantity of repetitions of the reference signal resource; a minimum value of the quantity of repetitions of the reference signal and N; a minimum value of a maximum quantity of hops supported by the terminal device and N; the repetition interval of the reference signal; the length of the first frequency hopping unit; $N3$; a length of the time window; a length of radio frequency switching time of the time window; a start location of the first frequency hopping unit; or the length of the first time unit. The repetition interval is a time interval between two adjacent repeated transmissions, a quantity of times that the reference signal resource repeatedly falls within one frequency hopping unit is 1, and $N3$ indicates a time length that is for processing the reference signal and that is supported by the terminal device.

In a possible implementation of the first aspect or the second aspect, $N_{hop}$ satisfies the following formula:

$$N_{hop} = min\left(\left\lfloor \frac{(P-1)\times Q}{K} \right\rfloor + 1, N_{hop,max}\right).$$

$P$ is the quantity of repetitions of the reference signal resource in the time window, $Q$ is the repetition interval of the reference signal, K is the length of the first frequency hopping unit, and $N_{hop,max}$ is the maximum value of the quantity of hops supported by the terminal device.

In a possible implementation of the first aspect or the second aspect, $N_{hop}$ is less than or equal to $\left\lfloor \frac{N3}{L_{per-hop}} \right\rfloor$, and $L_{per-hop}$ reference signal resource duration in the first time unit in the first frequency hopping unit.

In a possible implementation of the first aspect or the second aspect, $N_{hop}$ is less than or equal to $N_{hops,effect}$, and $N_{hops,effect}$ is a quantity of hops determined by the terminal device in a time window based on a resource configuration of the reference signal and radio frequency switching time.

In a possible implementation of the first aspect or the second aspect, $N_{hop}$ satisfies the following formula:

$$N_{hop} = min\left(N_{hops,effect}, \left\lfloor \frac{N3}{L_{per-hop}} \right\rfloor, N_{hop,max}\right).$$

$N_{hops,effect}$ is a quantity of hops determined by the terminal device in a time window based on a resource configuration and radio frequency switching time, and $L_{per-hop}$ is reference signal resource duration in the first time unit in the first frequency hopping unit.

In a possible implementation of the first aspect or the second aspect, $N_{hops,effect}$ is related to one or more of the following: a length of the time window, radio frequency switching time reserved in the time window, a start location of a 1st first frequency hopping unit in the time window, the length of the first frequency hopping unit, or the length of the first time unit.

In a possible implementation of the first aspect or the second aspect, $N_{hops,effect}$ satisfies the following formula:

$$N_{hops,effect} = \sum_n min(N_{rep,n}^{PRS}, N_{rep}^{max}).$$

n is an $n^{th}$ hop in the time window, or n indicates an $n^{th}$ frequency hopping unit; $N_{rep,n}^{PRS}$ is a quantity of repetitions of a reference signal resource that is unmuted in signal receiving time in the $n^{th}$ hop or the $n^{th}$ frequency hopping unit; and $N_{rep}^{max}$ is related to the length of the first frequency hopping unit or a quantity of hops in a time unit.

In a possible implementation of the first aspect or the second aspect, when the length of the first frequency hopping unit is seven symbols, or the quantity of hops in the time unit is 2, $N_{rep}^{max} = 2$; or when the length of the first frequency hopping unit is not seven symbols, or the quantity of hops in the time unit is not 2, $N_{rep}^{max} = 1$.

For example, when the length of the first frequency hopping unit is seven symbols, and the quantity of hops in the slot (slot) is 2, for 15k, if $N_{rep}^{PRS}$ represents an integer quantity of slots obtained after frequency hopping switching time is subtracted from the time window, $N_{hops,effect} = 2 * N_{rep}^{PRS} + 2$; or $N_{hops,effect} = 2 * N_{rep}^{PRS} + 1$. A start location of the slot is the same as downlink timing of the terminal device.

For another example, when the length of the first frequency hopping unit is 14 symbols, and the quantity of hops in the slot is 1, for 15k, if $N_{rep}^{PRS}$ represents an integer quantity of slots obtained after frequency hopping switching time is subtracted from the time window, $N_{hops,effect} = N_{rep}^{PRS} + 1$.

In a possible implementation of the first aspect or the second aspect, $N_{hops,effect}$ satisfies the following formula:

$$N_{hops,effect} = floor\left(\frac{\text{first value}-\text{second value}-\text{third value}-\text{fourth value}}{\text{length of the first frequency hopping unit}}\right) + 1; \text{ or}$$

$$N_{hops,effect} = floor\left(\frac{\text{first value}-\text{second value}-\text{third value}}{\text{length of the first frequency hopping unit}}\right).$$

The first value is the length of the time window, the second value is the radio frequency switching time reserved in the time window, the third value is the start location of the 1st first frequency hopping unit in the time window, and the fourth value is the length of the first time unit.

In a possible implementation of the first aspect or the second aspect, the terminal device needs to complete measurement on a plurality of frequencies, reference signal resource duration in each time window periodicity in a reference signal resource validity periodicity is different, and a quantity $N_{hop,k,j}$ of hops of the terminal device at a $k^{th}$ frequency in a $j^{th}$ time window satisfies the following formula:

$$N_{hop,k,j} = min\left(N_{hops,effect,k,j}, N_{store,k,j}, N_{hop,max,k}\right).$$

$N_{hops,effect,k,j}$ is a quantity of hops determined by the terminal device in the $j^{th}$ time window of a $k^{th}$ frequency layer based on a configuration of the reference signal and radio frequency switching time, $N_{hop,max,k}$ is a maximum value of a quantity of hops supported by the terminal device at the $k^{th}$ frequency layer, $N_{store,k,j}$ is related to one or more of the following: $N3$, $L_{per-hop,k,j}$, or $L_{per-hop,k,j,n}$, $L_{per-hop,k,j}$ is reference signal resource duration in a first time unit in a first frequency hopping unit in the $j^{th}$ time window in a reference signal resource validity periodicity $T_{available\_PRS,k}$ of the $k^{th}$ frequency layer, and $L_{per-hop,k,j,n}$ is reference signal resource duration in an $n^{th}$ frequency hopping unit/a first time unit in an $n^{th}$ hop in the $j^{th}$ time window in the reference signal resource validity periodicity $T_{available\_PRS,k}$ of the $k^{th}$ frequency layer.

Optionally, $N_{store,k,j} = \left\lfloor \dfrac{N3}{L_{per-hop,k,j}} \right\rfloor$ , or $N_{store,k,j}$ is maximum $N_{store,k,j}$ that satisfies

$$\sum_{n=1}^{N_{store,k,j}} L_{per-hop,k,j,n} \leq N3 .$$

$L_{per-hop,k,j}$ is a maximum value of all $L_{per-hop,k,j,n}$(n=1, 2, 3, ...) in the $j^{th}$ time window in the reference signal resource validity periodicity $T_{available\_PRS,k}$ of the $k^{th}$ frequency layer; or
$L_{per-hop,k,j}$ is any value of all $L_{per-hop,k,j,n}$(n=1, 2, 3, ...) in the $j^{th}$ time window in the reference signal resource validity periodicity $T_{available\_PRS,k}$ of the $k^{th}$ frequency layer; or
$L_{per-hop,k,j}$ is a maximum value of all $L_{per-hop,k,j,n}$(n=1, 2, 3, ...) in all time windows in the reference signal resource validity periodicity $T_{available-PRS,k}$ of the $k^{th}$ frequency layer.

In a possible implementation of the first aspect or the second aspect, an effective length $L_{available\_pRS,k}$ of the reference signal in the time window of the $k^{th}$ frequency layer satisfies:

$$L_{available\_PRS,k} = \sum_{j=1}^{J} N_{hop,k,j} * L_{per-hop,k,j} \text{ ; or } L_{available\_PRS,k} = \sum_{j=1}^{J} \sum_{n=1}^{N_{hop,k,j}} L_{per-hop,k,j,n} .$$

In a possible implementation of the first aspect or the second aspect, $N_{hops,effect,k,j}$ satisfies the following formula:

$$N_{hops,effect,k,j} = \sum_{n} min(N_{rep,k,j,n}^{PRS}, N_{rep}^{max}).$$

n is the $n^{th}$ hop in the time window, or n indicates the $n^{th}$ frequency hopping unit; $N_{rep,k,j,n}^{PRS}$ is a quantity of repetitions of a reference signal resource that is unmuted in signal receiving time in the $n^{th}$ hop or a first time unit in the $n^{th}$ frequency hopping unit in the $j^{th}$ time window of the $k^{th}$ frequency layer; and $N_{rep}^{max}$ is related to the length of the first frequency hopping unit or the quantity of hops in the slot.

In a possible implementation of the first aspect or the second aspect, a quantity $N_{hop,k,j}$ of hops of the terminal device in any time window of the $k^{th}$ frequency layer is a minimum value of all $N_{hop,k,j}$ or a minimum value of all $N_{hop,k,j}$ of the $k^{th}$ frequency layer.

In a possible implementation of the first aspect or the second aspect, K satisfies: $K = max(K', Q)$, where when the switching time of the terminal device in the time window is less than a preset threshold, $K'=1$; or otherwise, $K'=2$.

In a possible implementation of the first aspect or the second aspect, the maximum value of the quantity of hops supported by the terminal device is related to maximum bandwidth across hops supported by the terminal device.

In a possible implementation of the first aspect or the second aspect, the maximum value of the quantity of hops supported by the terminal device and maximum bandwidth across hops supported by the terminal device satisfy:

$$BW_{PRS.max} = N_{hop,max} \times BW_{per-hop} - \left(N_{hop,max} - 1\right) \times BW_{overlap}; \text{ or}$$

$$N_{hop,max} = \left\lceil \frac{BW_{PRS.max} - BW_{overlap}}{BW_{per-hop} - BW_{overlap}} \right\rceil.$$

$BW_{PRs.max}$ is the maximum bandwidth across hops supported by the terminal device, $N_{hop,max}$ is the maximum value of the quantity of hops supported by the terminal device, $BW_{overlap}$ is overlapping bandwidth across hops, and $BW_{per-hop}$ is maximum bandwidth that can be received by the terminal device per hop.

In a possible implementation of the first aspect or the second aspect, an effective length Lprs of the reference signal in the time window is determined based on a length of the reference signal in each frequency hopping unit and/or the quantity of hops of the terminal device in the time window.

For example, Lprs satisfies: Lprs=Nhop×Lper_hop, or Lprs=sum(Lper_hop), where Lper_hop is a length of the reference signal in each frequency hopping unit, and sum is summation.

In a possible implementation of the first aspect, the method further includes: The terminal device receives configuration information, where the configuration information includes one or more of the following: the length of the first frequency hopping unit, the start location of the first frequency hopping unit, the periodicity of the first frequency hopping unit, or a quantity of first frequency hopping units.

In the method provided in the second aspect, the method further includes: The network device sends configuration information, where the configuration information includes one or more of the following: a length of the first frequency hopping unit, a start location of the first frequency hopping unit, a periodicity of the first frequency hopping unit, or a quantity of first frequency hopping units.

One or more of the foregoing information may be configured by the network device for the terminal device, which is flexible.

According to a third aspect, an embodiment of this application provides a communication method. The method may be performed by a first communication apparatus. The first communication apparatus may be a terminal device. Alternatively, the first communication apparatus is a component configured to implement a function of the terminal device. For example, the first communication apparatus is a unit/module, a circuit, or a chip in the terminal device. The following describes the method provided in the first aspect by using an example in which the first communication apparatus is the terminal device.

The communication method includes: The terminal device sends capability information, where the capability information indicates a frequency hopping capability of the terminal device, or the capability information indicates a capability supported by the terminal device when the terminal device receives and/or sends a reference signal in a frequency hopping manner. The frequency hopping capability of the terminal device includes *(N3,* T3), where N3 indicates a time length that is for processing the reference signal and that is supported by the terminal device, and may represent a frequency hopping storage capability of the terminal device, and T3 indicates time required by the terminal device to process the reference signal of *N3. N*3 is determined based on first bandwidth, and T3 is determined based on second bandwidth.

Correspondingly, according to a fourth aspect, an embodiment of this application provides a communication method, which may be performed by a second communication apparatus. The second communication apparatus may be a network device. Alternatively, the second communication apparatus is a component configured to implement a function of the network device. For example, the second communication apparatus is a unit/module, a circuit, or a chip in the network device. The following describes the method provided in the fourth aspect by using an example in which the second communication apparatus is the network device.

The communication method includes: The network device receives capability information, and sends a reference signal to a terminal device based on the capability information. The capability information indicates a frequency hopping capability of the terminal device, or the capability information indicates a capability supported by the terminal device when the terminal device receives and/or sends a reference signal in a frequency hopping manner. The frequency hopping capability of the terminal device includes (N3, T3), where N3 indicates a time length that is for processing the reference signal and that is supported by the terminal device, and T3 indicates time required by the terminal device to process the reference signal of *N3. N*3 is determined based on first bandwidth, and T3 is determined based on second bandwidth.

Optionally, T3 indicates time required for storing and processing the reference signal of N3 by the terminal device.

In a possible implementation of the third aspect or the fourth aspect, the first bandwidth is bandwidth per hop of the terminal device, or the first bandwidth is bandwidth that can be used by the terminal device to process the reference signal, or the first bandwidth is maximum bandwidth that can be processed by the terminal device.

In a possible implementation of the third aspect or the fourth aspect, the second bandwidth is maximum bandwidth of the reference signal, or the second bandwidth is bandwidth across a plurality of hops of the terminal device, or the second bandwidth is maximum bandwidth across hops supported by the terminal device.

In a possible implementation of the third aspect or the fourth aspect, the capability information further includes a non-frequency hopping capability of the terminal device, and the non-frequency hopping capability is a capability supported when the terminal device receives and/or sends a reference signal without using a frequency hopping manner, or the non-frequency hopping capability is a capability supported when the terminal device receives and/or sends a reference signal at one receive frequency. The non-frequency hopping capability of the terminal device includes (N, T), where N indicates a time length that is for processing the reference signal and that is supported by the terminal device, and T indicates time required by the terminal device to process the reference signal of N. N is determined based on first bandwidth, and T is determined based on the first bandwidth.

In a possible implementation of the third aspect or the fourth aspect, the capability information further includes a maximum quantity of hops supported by the terminal device.

In a possible implementation of the third aspect or the fourth aspect, the capability information further indicates whether the terminal device supports simultaneous reporting of one-hop or multi-hop results.

Optionally, the capability information includes one or more of the following:

maximum bandwidth for processing the reference signal by the terminal device;
a capability of the terminal device to buffer the reference signal;
a capability of the terminal device to process the reference signal of the duration N in unit duration (for example, T milliseconds); or
a quantity of reference signals that can be processed by the terminal device in unit duration (for example, a single slot), where the quantity of reference signals includes a quantity of reference signal resources.

Optionally, the maximum bandwidth for processing the reference signal by the terminal device is the second bandwidth.

According to a fifth aspect, an embodiment of this application provides a communication method. The method may be performed by a first communication apparatus. The first communication apparatus may be a terminal device. Alternatively, the first communication apparatus is a component configured to implement a function of the terminal device. For example, the first communication apparatus is a unit/module, a circuit, or a chip in the terminal device. The following describes the method provided in the first aspect by using an example in which the first communication apparatus is the terminal device.

The communication method includes: The terminal device sends capability information, where the capability information indicates a frequency hopping capability of the terminal device, or the capability information indicates a capability supported by the terminal device when the terminal device receives and/or sends a reference signal in a frequency hopping manner. The frequency hopping capability of the terminal device includes (N3, T3), where N3 indicates that the terminal device can process a first reference signal with duration (duration) of N3, and T3 indicates that the terminal device can process a second reference signal with duration of N3 in time T3.

Correspondingly, according to a sixth aspect, an embodiment of this application provides a communication method, which may be performed by a second communication apparatus. The second communication apparatus may be a network device. Alternatively, the second communication apparatus is a component configured to implement a function of the network device. For example, the second communication apparatus is a unit/module, a circuit, or a chip in the network device. The following describes the method provided in the sixth aspect by using an example in which the second communication apparatus is the network device.

The communication method includes: The network device receives capability information, and sends a reference signal to a terminal device based on the capability information. The capability information indicates a frequency hopping capability of the terminal device, or the capability information indicates a capability supported by the terminal device when the terminal device receives and/or sends a reference signal in a frequency hopping manner. The frequency hopping capability of the terminal device includes (N3, T3), where N3 indicates that the terminal device can process a first reference signal with duration (duration) of N3, and T3 indicates that the terminal device can process a second reference signal with duration of N3 in time T3.

For example, (maximum) bandwidth of the first reference signal is maximum receive bandwidth, and (maximum) bandwidth of the second reference signal is maximum reference signal bandwidth or maximum processing bandwidth supported by the UE. Alternatively, (maximum) bandwidth of the first reference signal is maximum reference signal bandwidth, and (maximum) bandwidth of the second reference signal is maximum reference signal bandwidth.

In a possible implementation of the fifth aspect or the sixth aspect, the capability information further includes a non-frequency hopping capability of the terminal device, and the non-frequency hopping capability is a capability supported when the terminal device receives and/or sends a reference signal without using a frequency hopping manner, or the non-frequency hopping capability is a capability supported when the terminal device receives and/or sends a reference signal at one receive frequency. The non-frequency hopping capability of the terminal device includes (N, T), where (N, T) indicates that the terminal device can process a third reference signal with duration (duration) of N in duration T; or N indicates that the terminal device can process a third reference signal with duration (duration) of N; and T indicates that the terminal device can process the third reference signal with the duration of N in the time T. For example, (maximum) bandwidth of the third reference signal is maximum receive bandwidth.

According to a seventh aspect, an embodiment of this application provides a communication apparatus. The communication apparatus has a function of implementing behavior in the method example in any one of the first aspect to the sixth aspect. For beneficial effect, refer to related descriptions of the first aspect to the sixth aspect. Details are not described herein again. For example, the communication apparatus may be the terminal device in the first aspect, the third aspect, or the fifth aspect, or the communication apparatus may be an apparatus that can support the terminal device in implementing a function required by the method provided in the first aspect, the third aspect, or the fifth aspect. For example, the communication apparatus may be a chip or a chip system in the terminal device. For another example, the communication apparatus may be the network device in the second aspect, the fourth aspect, or the sixth aspect, or the communication apparatus may be an apparatus that can support the network device in implementing a function required by the method provided in the second aspect, the fourth aspect, or the sixth aspect. For example, the communication apparatus may be a chip or a chip system in the network device.

In a possible design, the communication apparatus includes a baseband apparatus and a radio frequency apparatus.

In a possible design, the communication apparatus includes a corresponding means (means) or module configured to perform the method according to any one of the first aspect to the sixth aspect. For example, the communication apparatus includes a processing unit (which may also be a processing module or a processor) and/or a transceiver unit (which may also be a transceiver module or a transceiver). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, the functional unit is referred to as the transceiver unit, and the functional unit can implement the sending function and the receiving function. Alternatively, the sending unit and the receiving unit may be different functional units, and the transceiver unit is a general term for these functional units. These units (modules) may perform corresponding functions in the method examples according to any one of the first aspect to the sixth aspect. For details, refer to the detailed descriptions in the method examples. Details are not described herein.

According to an eighth aspect, an embodiment of this application provides a communication apparatus. The communication apparatus may be the communication apparatus in the seventh aspect of the foregoing embodiments, or may be a chip or a chip system disposed in the communication apparatus in the seventh aspect. The communication apparatus includes a processor, and optionally, further includes a memory. The memory is configured to store a computer program, instructions, or data, and the processor is coupled to the memory and the communication interface. When the processor reads the computer program, the instructions, or the data, the communication apparatus is enabled to perform the methods performed by the terminal device in the foregoing method embodiments. For example, the communication apparatus may be a terminal device or a functional module in the terminal device, for example, a baseband chip and a radio frequency chip. Alternatively, when the processor reads the computer program, the instructions, or the data, the communication apparatus is enabled to perform the methods performed by the network device in the foregoing method embodiments. For example, the communication apparatus may be a network device or a functional module in the network device, for example, a baseband chip and a radio frequency chip.

According to a ninth aspect, an embodiment of this application provides a chip system. The chip system includes a processor, and may further include a communication interface, to implement the method according to any one of the first aspect to the sixth aspect. Optionally, the chip system further includes the memory. The memory is configured to store a computer program (which may also be referred to as code or instructions). The processor is configured to invoke the computer program from the memory and run the computer program, so that a device in which the chip system is installed performs the method according to any one of the first aspect to the sixth aspect or the possible implementations of the first aspect to the sixth aspect. The chip system may include a chip, or may include a chip and another discrete component.

According to a tenth aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method according to any one of the first aspect to the sixth aspect.

In a specific implementation process, the communication apparatus may be a chip, the input circuit may be an input pin, the output circuit may be an output pin, and the logic circuit may be a transistor, a gate circuit, a trigger, various logic circuits, and the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the input/output interface and the logic circuit are not limited in this application.

In an implementation, when the communication apparatus is a wireless communication device, the wireless communication device may be a terminal device such as a mobile phone, or the wireless communication device may be a network device such as a base station. The interface circuit may be a radio frequency processing chip in the wireless communication device, and a processing circuit may be a baseband processing chip in the wireless communication device.

According to an eleventh aspect, an embodiment of this application provides a communication system. The communication system includes a terminal device and a network device. The terminal device is configured to implement a function of the method in the first aspect, and the network device is configured to implement a function of the method in the second aspect. Alternatively, the terminal device is configured to implement a function of the method in the third aspect, and the network device is configured to implement a function of the method in the fourth aspect. Alternatively, the terminal device is configured to implement a function of the method in the fifth aspect, and the network device is configured to implement a function of the method in the sixth aspect.

According to a twelfth aspect, an embodiment of this application further provides a computer-readable storage medium. The computer-readable storage medium is configured to store a computer program or instructions. When the computer program or the instructions are run, the method according to any one of the first aspect to the sixth aspect or the possible implementations of the first aspect to the sixth aspect is implemented.

According to a thirteenth aspect, an embodiment of this application further provides a computer program product including instructions. When the computer program product runs on a computer, the method according to any one of the first aspect to the sixth aspect or the possible implementations of the first aspect to the sixth aspect is implemented.

For beneficial effect of the seventh aspect to the thirteenth aspect and the implementations of the seventh aspect to the thirteenth aspect, refer to the descriptions of the beneficial effect of any one of the first aspect to the sixth aspect or the possible implementations of the first aspect to the sixth aspect.

BRIEF DESCRIPTION OF DRAWINGS

FIG. 1 is a diagram of an architecture of a communication system to which an embodiment of this application is applicable;

FIG. 2 is a diagram of receiving a positioning reference signal by a terminal device in a frequency hopping manner according to an embodiment of this application;

FIG. 3 is a diagram of two PRS resource distributions;

FIG. 4 is a schematic flowchart of a communication method according to an embodiment of this application;

FIG. 5 is a diagram (Example 1) of a distribution of frequency hopping units in a time window according to an embodiment of this application;

FIG. 6 is a diagram (Example 2) of a distribution of frequency hopping units in a time window according to an embodiment of this application;

FIG. 7 is a diagram (Example 3) of a distribution of frequency hopping units in a time window according to an embodiment of this application;

FIG. 8 is a diagram (Example 4) of a distribution of frequency hopping units in a time window according to an embodiment of this application;

FIG. 9 is a diagram of a repetition interval of a reference signal according to an embodiment of this application;

FIG. 10 is a diagram of a repetition interval of a reference signal in a time window according to an embodiment of this application;

FIG. 11 is a diagram (Example 1) of frequency hopping in a time window according to an embodiment of this application;

FIG. 12 is a diagram (Example 2) of frequency hopping in a time window according to an embodiment of this application;

FIG. 13 is a diagram (Example 3) of frequency hopping in a time window according to an embodiment of this application;

FIG. 14 is a diagram (Example 4) of frequency hopping in a time window according to an embodiment of this application;

FIG. 15 is a diagram of a structure of a communication apparatus according to an embodiment of this application; and

FIG. 16 is a diagram of another structure of a communication apparatus according to an embodiment of this application.

DESCRIPTION OF EMBODIMENTS

The method provided in embodiments of this application may be applied to a scenario in which a receive end receives a reference signal from a transmit end in a frequency hopping manner, which can save reference signal resources, and achieve an effect of wide receive bandwidth of the reference signal. With reference to the accompanying drawings, the following further describes the solutions provided in embodiments of this application.

The technical solutions provided in embodiments of this application may be applied to various wireless communication systems. For example, the measurement reporting method provided in embodiments of this application may be applied to a 3rd generation partnership project (3rd generation partnership project, 3GPP)-related cellular system, for example, a long term evolution (long term evolution, LTE) communication system or a 5th generation (sixth generation, 5G) mobile communication system, or may be applied to another next-generation mobile communication system, for example, a 6th generation (6G) communication system, or another similar communication system. The 5G mobile communication system includes a new radio (new radio, NR) communication system. The another similar communication system may include a wireless fidelity (wireless fidelity, Wi-Fi) system, a vehicle-to-everything (vehicle-to-everything, V2X) system, an internet of things (internet of things, IoT) system, a narrowband internet of things (narrowband internet of things, NB-IoT) system, and the like.

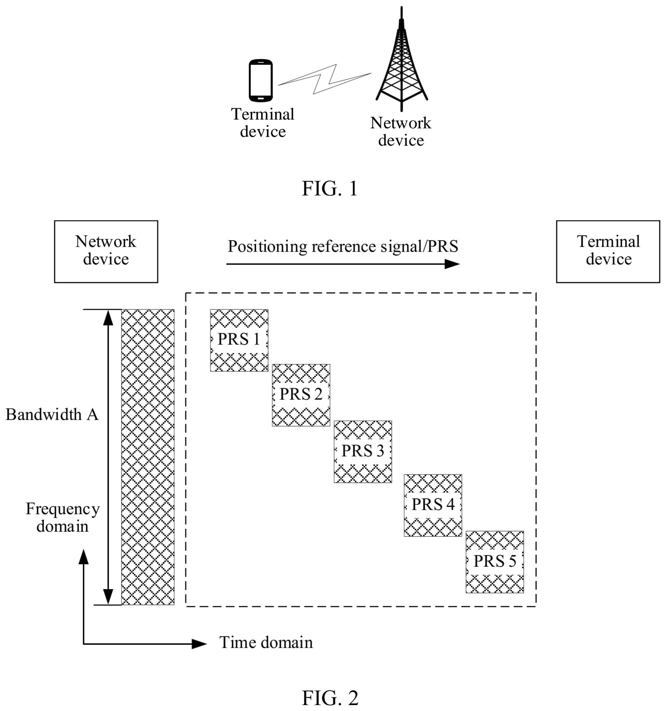

FIG. 1 shows a network architecture of a communication system. The network architecture may include at least one network device and at least one terminal device. In FIG. 1, an example in which the at least one terminal device is one terminal device and the at least one network device is one network device is used. The network device may be a radio access network (radio access network, RAN) device (referred to as an access network device for short), or the network device includes an access network device and a core network. The network architecture shown in FIG. 1 is merely an example, and there may be fewer or more terminal devices and/or network devices. The communication system described in embodiments of this application is intended to describe the technical solutions in embodiments of this application more clearly, but constitutes no limitation on the communication system to which embodiments of this application are applicable. A person of ordinary skill in the art may know that with evolution of the network architecture, the technical solutions provided in embodiments of this application are also applicable to a similar technical problem. When the technical solutions in embodiments of this application are applied to another communication system, the devices, components, modules, and the like in embodiments may be replaced with corresponding devices, components, and modules in the another communication system. This is not limited.

The network device in embodiments of this application is mainly the access network device. Therefore, unless otherwise specified, the "network device" is the RAN device below. A RAN may be a 3GPP-related cellular system, for example, the 5G mobile communication system, or a future-oriented evolved system (for example, the 6G mobile communication system). Alternatively, a RAN may be an open access network (open RAN, O-RAN, or ORAN), a cloud radio access network (cloud radio access network, CRAN), a virtual radio access network (virtual RAN, vRAN), or the like. Alternatively, a RAN may be a communication system that integrates two or more of the foregoing systems. The RAN device may also be referred to as a RAN node, a RAN entity, an access node, or the like.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next-generation base station in the 6G mobile communication system, a base station in a future mobile communication system, or the like. The RAN node may be a macro base station, a micro base station, an indoor base station, a relay node, a donor node/host node, a radio controller, or the like. Alternatively, the RAN node may be a server, a wearable device, a vehicle, a vehicle-mounted device, or the like. For example, a RAN node in a V2X technology may be a roadside unit (roadside unit, RSU).

In another possible scenario, the RAN node may be a module or a unit that completes some functions of the base station; or a plurality of RAN nodes cooperate to assist the terminal device in implementing radio access, and different RAN nodes separately implement some functions of the base station. For example, the RAN node may be a central unit (central unit, CU), a distributed unit (distributed unit, DU), or a radio unit (radio unit, RU). Functions of the CU may be implemented by one entity, or may be implemented by different entities. For example, the functions of the CU may be further divided. That is, a control plane and a user plane are separated and implemented by different entities, which are respectively a CU-control plane entity (namely, a CU-control plane (control plane, CP) entity) and a CU-user plane entity (namely, a CU-user plane (user plane, UP) entity). The CU-CP entity and the CU-UP entity may be coupled to the DU, to jointly complete functions of the RAN node. The CU and the DU may be separately arranged, or may be included in a same network element, for example, a baseband unit (baseband unit, BBU).

In different systems, the CU (or the CU-CP and the CU-UP), the DU, or the RU may alternatively have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by a software module, a hardware module, or a combination of a software module and a hardware module.

In embodiments of this application, an apparatus configured to implement a function of the network device may be a network device, or may be an apparatus that can support the network device in implementing the function, for example, a chip system or a combined component or part that can implement the function of the network device. The apparatus may be installed in the network device. A specific technology and a specific device form that are used by the network device are not limited in embodiments of this application.

The terminal device may also be referred to as a terminal, user equipment (user equipment, UE), a mobile station, a mobile terminal, or the like. The terminal device may be widely used in various scenarios, for example, device-to-device (device-to-device, D2D) communication, V2X communication, machine-type communication (machine-type communication, MTC), IoT, virtual reality, augmented reality, industrial control, self-driving, telemedicine, smart grid, smart furniture, smart office, smart wearable, smart transportation, and smart city. The terminal may be a mobile phone, a tablet computer, a computer having a wireless transceiver function, a wearable device, a vehicle, a vehicle-mounted device, an uncrewed aerial vehicle, a helicopter, an airplane, a ship, a hot air balloon, a robot, a robotic arm, a smart home device, or the like. The terminal device may further include a relay (relay). For example, the terminal device may be customer-premises equipment (customer-premises equipment, CPE). The CPE may receive a signal from the network device, and forward the signal to another terminal device. Alternatively, it is understood that any device that can perform data communication with the base station may be considered as the terminal device. For example, if the terminal devices described above are located in a vehicle (for example, placed in the vehicle or installed in the vehicle), the terminal devices all may be considered as vehicle-mounted terminal devices. For example, the vehicle-mounted terminal devices are also referred to as on-board units (on-board unit, OBU). A specific form of the terminal device is not limited in embodiments of this application.

Terminal devices may be classified into a plurality of types of terminal devices based on types of services supported by the terminal devices, for example, a low-complexity or reduced-capability (REDuced CAPability, REDCAP) terminal device and a non-low-complexity or non-reduced-capability terminal device. The non-low-complexity or non-reduced-capability terminal device, such as an enhanced mobile broadband (enhanced mobile broadband, eMBB) terminal device, may also be referred to as a normal terminal device or a legacy (legacy) terminal device. The REDCAP terminal device may also be referred to as an (NR light, NRL) terminal, that is, a lightweight terminal device. Compared with the legacy terminal device, the REDCAP terminal device is less complex in terms of aspects such as bandwidth, power consumption, and a quantity of antennas.

A first-type terminal device is a low-complexity terminal device. A second-type terminal device may be a terminal device other than the low-complexity terminal device. A difference between the first-type terminal device and the second-type terminal device includes at least one of the following:

1. Bandwidth capabilities are different. Maximum bandwidth supported by the first-type terminal device may be less than maximum bandwidth supported by the second-type terminal device. For example, the second-type terminal device may support a maximum of 100 MHz frequency domain resources on one carrier to communicate with the network device, while the first-type terminal device may support a maximum of 20 MHz or less frequency domain resources on one carrier to communicate with the network device.

2. Quantities of transceiver antennas are different. An antenna configuration of the first-type terminal device may be less than an antenna configuration of the second-type terminal device. For example, a minimum antenna configuration supported by the first-type terminal device may be less than a maximum antenna configuration supported by the second-type terminal device. For example, the first-type terminal device may support 2-receive and 1-transmit (two receive antennas and one transmit antenna) or 1-receive and 1-transmit (one receive antenna and one transmit antenna). The second-type terminal device may support 4-receive and 2-transmit (four receive antennas and two transmit antennas).

3. Maximum uplink transmit power is different. Maximum uplink transmit power of the first-type terminal device is less than maximum uplink transmit power of the second-type terminal device.

4. Protocol releases are different. The first-type terminal device may be considered as a terminal device in NR release 17 (release-17, Rel-17) or a release later than NR Rel-17. The second-type terminal device may be a terminal device in NR release 15 (release-15, Rel-15) or NR release 16 (release-16, Rel-16).

5. Carrier aggregation (carrier aggregation, CA) capabilities are different. For example, the first-type terminal device does not support carrier aggregation, while the second-type terminal device may support carrier aggregation. For another example, both the second-type terminal device and the first-type terminal device support carrier aggregation, but a maximum quantity of cells simultaneously supported by the first-type terminal device for carrier aggregation is less than a maximum quantity of cells simultaneously supported by the second-type terminal device for carrier aggregation.

6. Frequency division duplex (frequency division duplex, FDD) capabilities are different. For example, the first-type terminal device supports only half-duplex FDD, while the second-type terminal device supports full-duplex FDD.

7. Data processing time capabilities are different. For example, a minimum delay between receiving downlink data and sending feedback on the downlink data by the first-type terminal device is greater than a minimum delay between receiving downlink data and sending feedback on the downlink data by the second-type terminal device.

8. Processing capabilities (ability/capability) are different. For example, a baseband processing capability of the first-type terminal device is lower than a baseband processing capability of the second-type terminal device. The baseband processing capability may include at least one of the following: a maximum quantity of multiple-input multiple-output (multiple-input multiple-output, MIMO) layers supported by the terminal device during data transmission, a quantity of HARQ processes supported by the terminal device, and a maximum transport block size (transport block size, TBS) supported by the terminal device.

9. Uplink and/or downlink peak transmission rates are different. The peak transmission rate is a maximum data transmission rate that can be reached by the terminal device per unit of time (for example, per second). An uplink peak rate supported by the first-type terminal device may be lower than an uplink peak rate supported by the second-type terminal device, and/or a downlink peak rate supported by the first-type terminal device may be higher than a downlink peak rate supported by the second terminal device.

10. Buffer (buffer) sizes are different. A buffer (buffer) may be understood as a total size of a layer 2 (Layer 2, L2) buffer, and is defined as a sum of quantities of bytes buffered in a radio link control (radio link control, RLC) transmit window, receive window, and reordering window and a quantity of bytes buffered in a packet data convergence protocol (packet data convergence protocol, PDCP) reordering window for all radio bearers of the terminal device. Alternatively, a buffer (buffer) may be understood as a total quantity of soft channel bits that can be used for hybrid automatic repeat request (Hybrid Automatic Repeat reQuest, HARQ) processing.

Certainly, the foregoing is merely an example, and there may be another difference between the first-type terminal device and the second-type terminal device. In addition to the foregoing differences, there may be another difference. For example, the first-type terminal device supports coverage enhancement, while the second-type terminal device does not support coverage enhancement. For another example, the first-type terminal device supports small packet transmission, while the second-type terminal device does not support small packet transmission. Examples are not described herein one by one.

The terminal device in embodiments of this application may be the first-type terminal device, or may be the second-type terminal device. In embodiments of this application, an apparatus configured to implement a function of the terminal device may be the terminal device, or may be an apparatus that can support the terminal device in implementing the function, for example, a chip system or a combined device or component that can implement the function of the terminal device. The apparatus may be installed in the terminal device. A specific technology and a specific device form that are used by the terminal device are not limited in embodiments of this application.

The foregoing describes the network architecture to which embodiments of this application are applicable. For ease of understanding, the following first describes related content and some technical terms in embodiments of this application.

In a downlink positioning process, the terminal device receives and measures positioning reference signals (positioning reference signal, PRS) from a plurality of network devices, the terminal device sends a measurement result to the network device, and the network device estimates a location of the terminal device based on the received measurement result. Herein, "downlink" refers to a direction from the network device to the terminal device.

Positioning accuracy of the terminal device is related to a size of bandwidth for receiving the PRS, and larger bandwidth for receiving the PRS indicates higher positioning accuracy. The terminal device receives the PRS from the network device in a frequency hopping (frequency hopping) manner, so as to increase the bandwidth for receiving the PRS. Frequency hopping means that a frequency domain resource used to transmit information changes in a period of time according to a predetermined rule. For example, if a quantity of hops is n, the information may be divided into n parts, and the n parts are transmitted in a period of time by using different frequency domain resources, where n is a positive integer.

For ease of understanding, FIG. 2 is a diagram of receiving a PRS by a terminal device in a frequency hopping manner. For example, five frequency hopping moments are included in FIG. 2. Correspondingly, received PRSs include a PRS 1 to a PRS 5. A network device sends PRSs on entire bandwidth (for example, bandwidth A in FIG. 2), and the terminal device receives PRSs of different center frequencies at different frequency hopping moments by using corresponding radio frequency receive frequencies. Subsequently, the terminal device superimposes the PRSs at the plurality of consecutive frequency hopping moments, to implement an effect of "large bandwidth".

In a process in which the terminal device receives the PRS in the frequency hopping manner, frequency switching needs to be performed. For example, after receiving the PRS 1, the terminal device needs to switch a frequency, and subsequently receives the PRS 2 at the switched frequency. The frequency switching performed by the terminal device is also referred to as radio frequency switching/switching performed by the terminal device. The terminal device needs specific time to perform switching, and the time is referred to as switching time. The switching time is a period of time. In the period of time, the terminal device stops receiving a reference signal at one frequency, and switches to another frequency and receives another reference signal at the another frequency. It can be learned that the switching time includes time for which the terminal device is switched from a current frequency to a frequency that needs to be measured. PRS resources may be interrupted due to the existence of the switching time in a period of time, causing a waste of PRS resources. In addition, the interruption of PRS resources reduces a maximum quantity of hops of the terminal device in a period of time, resulting in poor effect of "large bandwidth", and low positioning performance.

The switching time of the terminal device is related to a capability of the terminal device (described below), a subcarrier spacing (subcarrier spacing, SCS) of a signal, and the like. For example, for a REDCAP terminal device, when the terminal device operates in frequency range (frequency range, FR) 1, the switching time is {70 $\mu$s, 140 $\mu$s, 210 $\mu$s}; or when the terminal device operates in FR2, the switching time is {35 $\mu$s, 70 $\mu$s, 140 $\mu$s}, where "$\mu$s" refers to microseconds. FR1 includes FRs supported by an LTE system and an NR system. FR2 is a higher frequency than FR1, and may be considered as an FR supported by the NR system. A lowest frequency in FR1 is greater than or equal to 450 MHz, and a highest frequency in FR1 is less than or equal to 6 GHz. A lowest frequency in FR2 is greater than or equal to 24.25 GHz, and a highest frequency in FR2 is less than or equal to 52.6 GHz.

For another example, refer to Table 1. Switching duration required by the terminal device in different SCSs is output.

Table 1

| SCS (kHz) / Switching time ($\mu$s) | 15 | 30 | 60 (FR1) | 60 (FR2) | 120 |
|---|---|---|---|---|---|
| 35 | N/A | N/A | N/A | 2 | 4 |
| 70 | 1 | 2 | 4 | 4 | 8 |
| 140 | 2 | 4 | 8 | 8 | 16 |
| 210 | 3 | 6 | 12 | N/A | N/A |

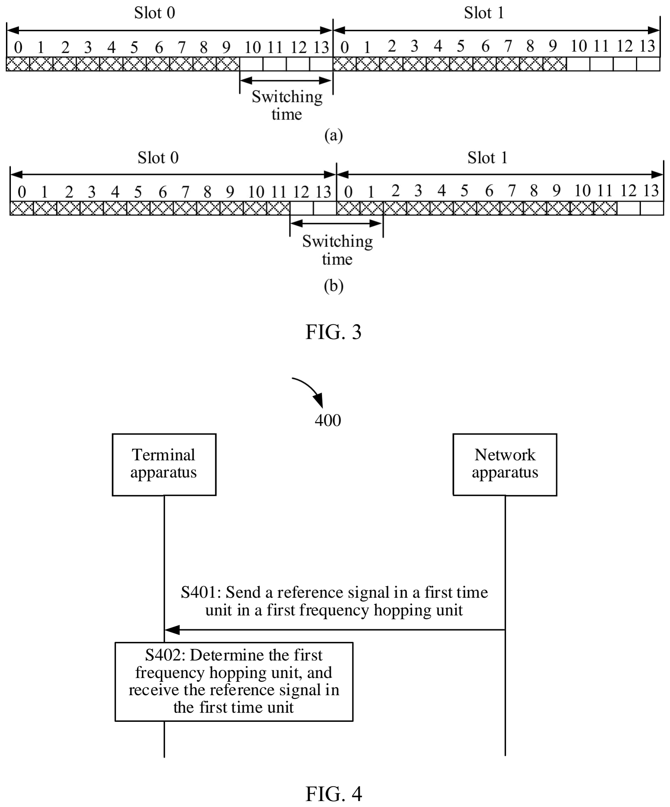

It can be learned from Table 1 that the switching duration of the terminal device may be one symbol, two symbols, three symbols, four symbols, six symbols, eight symbols, 12 symbols, or even 16 symbols. A waste of PRS resources varies with a distribution of PRS resources, switching time, and a quantity of hops in a period of time. For ease of understanding, the following describes a case in which a PRS resource is interrupted due to switching with reference to FIG. 3.

FIG. 3 shows two PRS resource distributions. FIG. 3 illustrates an example in which a time domain resource is two slots (namely, a slot 0 and a slot 1), and one slot includes 14 symbols (namely, a symbol 0 to a symbol 13). (a) in FIG. 3 illustrates an example in which a PRS resource occupies 10 symbols (that is, a symbol 0 to a symbol 9) in one slot; and (b) in FIG. 3 illustrates an example in which a PRS resource occupies 12 symbols (that is, a symbol 0 to a symbol 11) in one slot. FIG. 3 illustrates an example in which the switching time is duration occupied by four symbols.

It can be learned from (a) in FIG. 3 that the terminal device receives the PRS on the symbol 0 to the symbol 9 in the slot 0, and performs switching on the symbol 10 to the symbol 13 in the slot 0. The switching of the terminal device in the slot 0 does not interrupt the PRS in the slot 1, that is, the terminal device may receive the complete PRS in the slot 1. Relatively, it can be learned from (b) in FIG. 3 that the terminal device receives the PRS on the symbol 0 to the symbol 11 in the slot 0, and performs switching on the symbol 12 and the symbol 13 in the slot 0 and the symbol 0 and the symbol 1 in the slot 1. As a result, the PRS in the slot 1 is interrupted, that is, the terminal device cannot receive the complete PRS in the slot 1. Because the PRS in the slot 1 is interrupted, the PRS in the slot 1 is invalid/unnecessary/may not be sent for the terminal device. However, because the network device still sends the PRS in the slot 1, the PRS resource in the slot 1 is wasted. Compared with (a) in FIG. 3, in (b) in FIG. 3, the resource in the slot 1 is not used by the terminal device, and consequently a maximum quantity of hops of the terminal device is smaller, effect of "large bandwidth" is poorer, and positioning performance is also poorer.

To resolve the foregoing problems, the solutions provided in embodiments of this application are provided. In embodiments of this application, a terminal device performs frequency hopping in a unit of duration, and the duration is considered as a frequency hopping (frequency hopping, FH) unit. A time domain resource that corresponds to a frequency hopping unit and that is used to transmit a reference signal (referred to as a reference signal resource for short) does not overlap switching time in time domain, and switching time corresponding to a frequency hopping unit does not overlap a reference signal resource in an adjacent frequency hopping unit in time domain. The terminal device receives the reference signal on the reference signal resource in each frequency hopping unit, and performs frequency switching in the switching time. Because the reference signal resource and the switching time do not overlap in time domain, a reference signal resource in one or more frequency hopping units is not interrupted due to the existence of the switching time. According to the solutions provided in embodiments of this application, a quantity of times that the reference signal is interrupted can be reduced, thereby reducing a waste of reference signal resources. In addition, the terminal device can complete frequency hopping for more times in a period of time, increasing bandwidth of a received reference signal.

In embodiments of this application, a network device sends a reference signal on entire bandwidth, and the terminal device receives the reference signal from the network device in a frequency hopping manner. That the terminal device receives the reference signal in the frequency hopping manner is receiving reference signals in a plurality of frequency hopping units in a time window. Identifiers (identifier, ID) of reference signal resources corresponding to different frequency hopping units remain unchanged, and a reference signal received on one frequency hopping unit may be considered as a repetition of a reference signal received on another frequency hopping unit. However, content of reference signals received on different frequency hopping units may be different. For example, reference signal sequences sent on different frequency hopping units may be different. For example, a reference signal received on a frequency hopping unit A is a first reference signal, and a reference signal received on a frequency hopping unit B is a second reference signal. The second reference signal may be considered as a repetition of the first reference signal, but a sequence of the second reference signal is different from a sequence of the first reference sequence. For ease of description, in embodiments of this application, reference signals on different frequency hopping units are not distinguished, and the reference signals received on the different frequency hopping units are collectively referred to as a reference signal.

In addition, a repetition of the reference signal refers to a resource on which the reference signal is repeated. A repetition interval of the reference signal is an interval between two adjacent repeated transmissions of the reference signal. Alternatively, a repetition interval of the reference signal is an offset between two repeated instances of a reference signal resource (the offset may be in a unit of slots), and the two repeated instances correspond to reference signal resource IDs corresponding to a single instance in a reference signal resource set. Duration spanned by a reference signal resource set including a repeated reference signal resource cannot exceed a reference signal periodicity. For example, there are a plurality of frequency hopping units (a frequency hopping unit 0 to a frequency hopping unit N), where the frequency hopping unit i is a repeated resource on the frequency hopping unit j, and a reference signal on the frequency hopping unit i is a repetition of a reference signal on the frequency hopping unit j.

In embodiments of this application, "when", "as if", and "if" all mean that an apparatus performs corresponding processing in an objective case, are not intended to limit time, do not require the apparatus to necessarily have a determining action during implementation, and do not mean another limitation. "As if" and "if" are interchangeable. Unless otherwise specified, "when" and "in a case in which" are interchangeable. "Transmission" in embodiments of this application indicates sending and/or receiving.

Unless otherwise specified, a quantity of nouns represents "a singular noun or a plural noun", namely, "one or more". "A plurality of" means two or more. In view of this, "a physical of" may alternatively be understood as "at least two" in embodiments of this application. "At least one" may be one or more, for example, at least one is one, two, or more. For example, including at least one means that one, two, or more are included, and which one or ones are included is not limited. For example, if at least one of A, B, and C is included, A, B, C, A and B, A and C, B and C, or A, B, and C may be included. Likewise, understanding of descriptions such as "at least one" is similar. "At least one of the following" or a similar expression thereof indicates any combination of these items, including a single item or any combination of plural items. For example, "at least one of A, B, and C" includes A, B, C, AB, AC, BC, or ABC. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise specified, ordinal numbers such as "first" and "second" in embodiments of this application are for distinguishing between a plurality of objects, but are not intended to limit a sequence, a time sequence, priorities, or importance of the plurality of objects. In addition, descriptions of "first" and "second" do not mean that objects are necessarily different. For example, a first frequency hopping unit and a second frequency hopping unit indicate that there are two frequency hopping units, but priorities or importance degrees of the two frequency hopping units are not limited.

In embodiments of this application, any information, for example, configuration information, may be configured by using signaling. In a specific configuration process, the signaling may be, for example, but is not limited to, one or more of radio resource control (radio resource control, RRC) signaling, downlink control information (downlink control information, DCI), or a medium access control control element (medium access control control element, MAC CE). Names of the messages/information in embodiments of this application are merely examples. For example, the name of the configuration information is merely an example. With evolution of communications technologies, the name of any one of the foregoing messages may change. However, regardless of how the name of the message changes, provided that a meaning of the message is the same as the meaning of the foregoing message in this application, the message falls within the protection scope of this application.

With reference to the foregoing content and the accompanying drawings, the following describes the technical solutions provided in embodiments of this application.

FIG. 4 is an example of a schematic flowchart of a communication method according to an embodiment of this application. FIG. 4 describes the method from a perspective of interaction between a network apparatus and a terminal apparatus. In the communication method 400 provided in FIG. 4, steps performed by the network apparatus may be implemented by a RAN device, or may be implemented by a component (for example, a module such as a baseband chip, another processing unit, or another processor) in the RAN device. For example, the network apparatus may be the network device in 1, or may be a chip (system) in the network device in FIG. 1. Steps performed by the terminal apparatus may be implemented by a terminal device, or may be implemented by a component (for example, a module such as a chip, a processing unit, or a processor) in the terminal device. The terminal apparatus may be the terminal device shown in FIG. 1, or may be a chip (system) in the terminal device in FIG. 1. It should be noted that a reference signal in the communication method 400 provided in FIG. 4 may be a positioning reference signal, or may be another signal. The communication method 400 is applicable to positioning of the terminal device. For example, the network device sends a positioning reference signal to the terminal device, and the terminal device receives the positioning reference signal from the network device in a frequency hopping manner. Embodiments of this application are further applicable to another possible scenario, provided that a receive end receives a signal from a transmit end in a frequency hopping manner. As shown in FIG. 4, a procedure of the communication method 400 includes the following steps.

S401: The network apparatus sends a reference signal in a first time unit in a first frequency hopping unit.

S402: The terminal apparatus determines the first frequency hopping unit, and receives the reference signal in the first time unit.

It may be understood that an action of determining the first frequency hopping unit by the terminal device may be performed before S401, or may be performed after S401. This is not limited in this application.

The first frequency hopping unit is a unit frequency hopping unit, or the terminal device performs frequency hopping by using the first frequency hopping unit as a unit. The terminal apparatus can complete one time of frequency hopping in the first frequency hopping unit, and a length of the first frequency hopping unit is a unit length of frequency hopping performed by the terminal apparatus. Embodiments of this application relate to a plurality of frequency hopping units. The first frequency hopping unit is one of the plurality of frequency hopping units. The plurality of frequency hopping units are similar. In embodiments of this application, the frequency hopping units in embodiments of this application are described by using the first frequency hopping unit as an example.

A frequency hopping unit corresponds to time used to transmit a reference signal (time unit for short) and switching time, and the time unit and the switching time do not overlap in time domain. For example, the first frequency hopping unit includes the first time unit and first switching time. The first time unit is used to transmit the reference signal, the first switching time is used by the terminal device to switch from one frequency to another frequency, and the first time unit and the first switching time do not overlap in time domain. Switching time corresponding to a frequency hopping unit and a time unit that is in an adjacent frequency hopping unit and that is used to transmit a reference signal do not overlap in time domain. Alternatively, switching time between two same frequency hopping units and a time unit that is in the two frequency hopping units and that is used to transmit a reference signal do not overlap in time domain. For example, the first frequency hopping unit is adjacent to a second frequency hopping unit, the second frequency hopping unit includes a second time unit and second switching time, and the first switching time and the second time unit do not overlap in time domain, or the second switching time and the first time unit do not overlap in time domain.

When the terminal apparatus receives a reference signal from the network apparatus in a frequency hopping manner, the terminal apparatus receives the reference signal only in a time unit used to transmit the reference signal, and performs frequency switching only in switching time. For example, the terminal apparatus receives the reference signal in the first time unit in the first frequency hopping unit, and the terminal apparatus receives the reference signal in the second time unit in the second frequency hopping unit. If the terminal apparatus needs to perform frequency hopping from the first frequency hopping unit to the second frequency hopping unit, and the terminal apparatus performs frequency switching in the first switching time (for example, the terminal apparatus switches from a first frequency to a second frequency in the first switching time), the terminal apparatus receives the reference signal at the first frequency in the first time unit in the first frequency hopping unit, and receives the reference signal at the second frequency in the second time unit in the second frequency hopping unit.

Because a time unit that corresponds to each frequency hopping unit and that is used to transmit a reference signal does not overlap switching time in time domain, and switching time between two same frequency hopping units does not overlap in time domain a time unit that is in the two frequency hopping units and that is used to transmit a reference signal, the terminal apparatus can complete one time of frequency hopping in one frequency hopping unit without interrupting a reference signal resource, thereby reducing a waste of reference signal resources. In addition, because the reference signal resource is not interrupted in a period of time, the terminal device can complete more times of frequency hopping in the period of time, increasing bandwidth of the received reference signal. When the communication method 400 is applied to a positioning scenario, that is, the reference signal is a positioning reference signal, the communication method 400 can further improve positioning performance.

The first frequency hopping unit is one of a plurality of frequency hopping units in a time window, and similarly, the second frequency hopping unit is also one of the plurality of frequency hopping units in the time window. The time window is a period of time. The time window may be a time window customized by the terminal apparatus, or may be a measurement window, a measurement gap (gap) window, or the like of the terminal apparatus that is predefined/configured. It may be understood that the measurement gap window includes switching time, and the time window may be a window formed by subtracting the switching time from the measurement gap window. A length of the time window minus a length of radio frequency switching time in the time window is an effective length of the time window. If the reference signal is a positioning reference signal, the time window may be a positioning reference signal processing window (positioning reference signal processing window, PPW). The length of the time window is not limited in embodiments of this application. Optionally, a start location of the time window is in a unit of slots.

The time window may include N frequency hopping units, and N is an integer greater than or equal to 1. Time units that are in the N frequency hopping units and that are used to transmit reference signals may have a same length, and the frequency hopping units may correspond to a same switching time. According to different implementation forms of a frequency hopping unit, lengths of a 1st frequency hopping unit and a last frequency hopping unit in the N frequency hopping units may be different from lengths of other frequency hopping units. Using the first frequency hopping unit as an example, an implementation form of the first frequency hopping unit includes but is not limited to the following three forms. In the following descriptions, a reference signal time unit is a time unit used to transmit a reference signal.

**Implementation form 1:** A frequency hopping unit in the time window is divided into a reference signal time unit and a time unit used for switching.

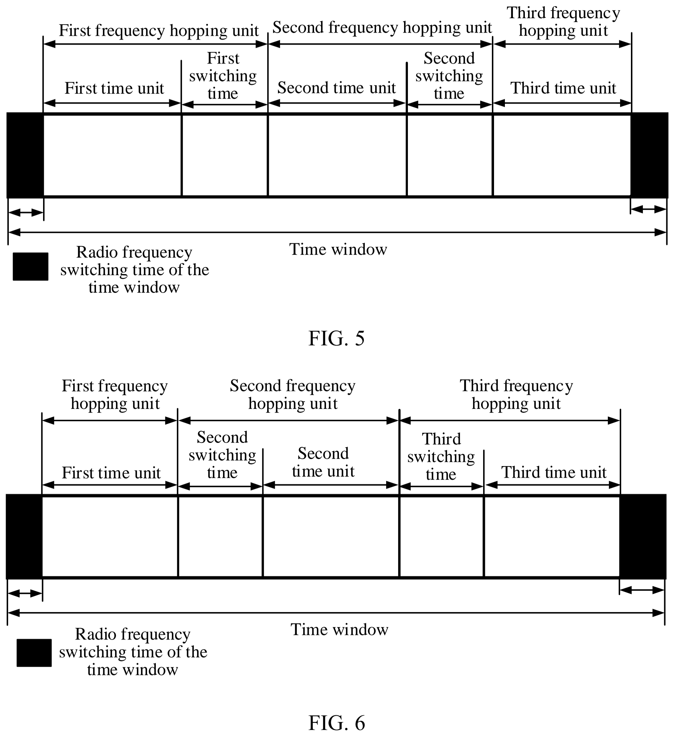

The first frequency hopping unit includes a first time unit and first switching time. The first time unit may be before the first switching time, or may be after the first switching time. A relative location relationship between the first time unit and the first switching time is not limited in embodiments of this application. In this implementation form, lengths of reference signal time units in the N frequency hopping units in the time window may be the same. For example, refer to FIG. 5. FIG. 5 illustrates an example in which the time window includes three frequency hopping units (that is, a first frequency hopping unit to a third frequency hopping unit), and a time unit in the frequency hopping unit is before switching time. In FIG. 5, a length of a first time unit, a length of a second time unit, and a length of a third time unit are the same.

Considering that the time window includes switching time, as shown in FIG. 5, there is a period of switching time (for example, 0.5 ms/0.25 ms) at a start location and an end location of the time window. For a frequency hopping unit, duration minus a reference signal time unit may be used for switching. To save resources, when switching time corresponding to the frequency hopping unit overlaps the switching time of the time window, the switching time corresponding to the frequency hopping unit includes the switching time of the time window, or the switching time of the time window includes the switching time corresponding to the frequency hopping unit. The switching time in the time window includes two parts: switching time at the head of the time window, and switching time at the tail of the time window. Therefore, switching time corresponding to a 1st frequency hopping unit or a last frequency hopping unit in the time window may be different from switching time of another frequency hopping unit in the time window.

For example, still refer to FIG. 5. FIG. 5 illustrates an example in which switching time in a frequency hopping unit is after a reference signal time unit, and a start location of the 1st frequency hopping unit is a start location of an effective length of the time window. In this case, the switching time corresponding to the last frequency hopping unit in the time window overlaps the switching time at the tail of the time window. In this case, it may also be considered that the last frequency hopping unit in the time window includes only the reference signal time unit, that is, the last frequency hopping unit in the N frequency hopping units includes only the reference signal time unit. For example, the third frequency hopping unit includes only the third time unit. The switching time corresponding to the last frequency hopping unit reuses the switching time at the tail of the time window. Alternatively, the last frequency hopping unit in the time window does not include switching time, that is, the last frequency hopping unit in the N frequency hopping units does not include switching time, and the switching time corresponding to the last frequency hopping unit reuses the switching time at the tail of the time window.

For another example, refer to FIG. 6. FIG. 6 illustrates an example in which switching time in a frequency hopping unit is before the reference signal time unit, and a start location of the 1st frequency hopping unit is a start location of an effective length of the time window. In this case, the switching time corresponding to the 1st frequency hopping unit in the time window overlaps the switching time at the head of the time window. In this case, it may also be considered that the 1st frequency hopping unit in the time window includes only the reference signal time unit. For example, the first frequency hopping unit includes only the first time unit. The switching time corresponding to the I$^{st}$ frequency hopping unit reuses the switching time at the head of the time window. Alternatively, the 1$^{st}$ frequency hopping unit in the time window does not include switching time, and the switching time corresponding to the 1$^{st}$ frequency hopping unit reuses the switching time at the tail of the time window.

**Implementation form 2:** A frequency hopping unit may include only a reference signal time unit.

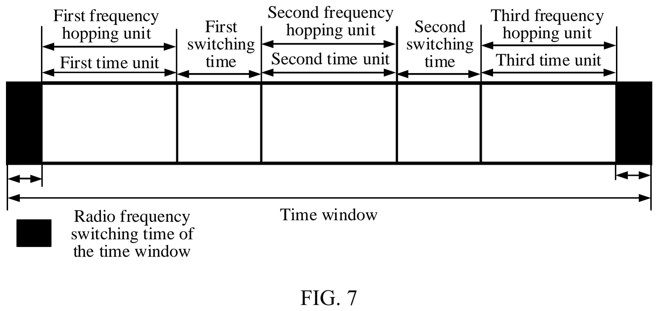

For example, refer to FIG. 7. FIG. 7 illustrates an example in which the time window includes three frequency hopping units (that is, a first frequency hopping unit to a third frequency hopping unit), and a time unit in the frequency hopping unit is before switching time. In FIG. 7, the first frequency hopping unit includes only a first time unit, the second frequency hopping unit includes only a second time unit, and the third frequency hopping unit includes only a third time unit. Switching time corresponding to each frequency hopping unit may be a period of time after the frequency hopping unit. For example, switching time corresponding to the first frequency hopping unit is first switching time, and switching time corresponding to the second frequency hopping unit is second switching time. A start location of the first switching time is an end location of the first time unit, and a start location of the second switching time is an end location of the second time unit.

In the implementation form 2, lengths of reference signal time units in the frequency hopping units in the time window are the same. For example, a length of the first time unit, a length of the second time unit, and a length of the third time unit are the same. Alternatively, lengths of the frequency hopping units in the time window are the same. For example, a length of the first frequency hopping unit, a length of the second frequency hopping unit, and a length of the third frequency hopping unit are the same.

If the switching time corresponding to the frequency hopping unit overlaps switching time of the time window, the frequency hopping unit may reuse the switching time of the time window. For example, switching time corresponding to a 1$^{st}$ frequency hopping unit in the time window includes switching time at the head of the time window, and switching time corresponding to a last frequency hopping unit includes radio frequency switching time at the tail of the time window. Alternatively, switching time corresponding to a 1$^{st}$ frequency hopping unit in the time window is in switching time at the head of the time window, and switching time corresponding to a last frequency hopping unit is in radio frequency switching time at the tail of the time window.

**Implementation form 3:** A frequency hopping unit includes a reference signal time unit and switching time, and the switching time includes a plurality of time periods distributed at two ends of the reference signal time unit.

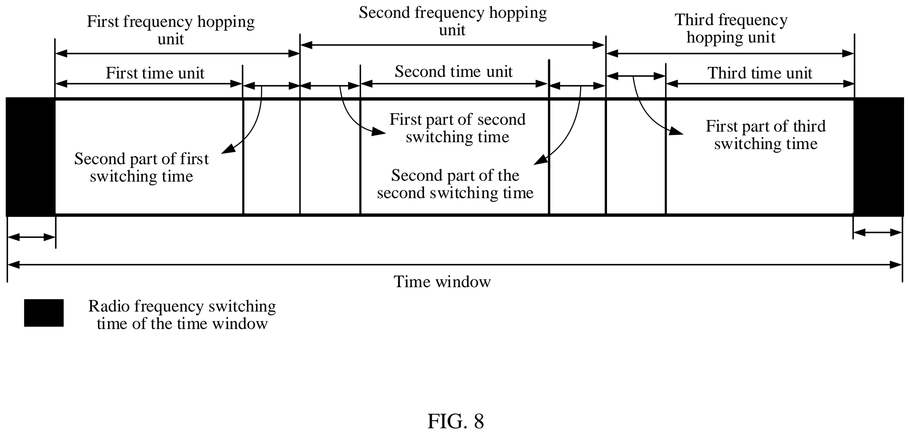

The first frequency hopping unit includes a first time unit and first switching time, the first switching time includes a first part and a second part, the first part is before the first time unit, and the second part is after the first time unit. For example, refer to FIG. 8. FIG. 8 illustrates an example in which the time window includes three frequency hopping units (that is, a first frequency hopping unit to a third frequency hopping unit). First switching time is switching time corresponding to the first frequency hopping unit, second switching time is switching time corresponding to the second frequency hopping unit, and third switching time is switching time corresponding to the third frequency hopping unit.

Similar to the implementation form 1/implementation form 2, if a part of switching time corresponding to a frequency hopping unit overlaps switching time of the time window, the part of the switching time reuses the switching time of the time window. For example, a first part of switching time of a 1$^{st}$ frequency hopping unit in the time window includes switching time at the head of the time window; or a first part of switching time of a 1$^{st}$ frequency hopping unit in the time window is in switching time at the head of the time window. Still using the example in FIG. 8, the first part of the first switching time of the first frequency hopping unit is the switching time at the head of the time window, and a second part of switching time of a last frequency hopping unit is switching time at the tail of the time window; or a second part of switching time of a last frequency hopping unit is in switching time at the tail of the time window. Still using the example in FIG. 8, a second part of the third switching time of the third frequency hopping unit is the switching time at the tail of the time window.

It should be noted that FIG. 5 to FIG. 8 are all illustrated by using an example in which an end location of the former frequency hopping unit in two adjacent frequency hopping units is a start location of the latter frequency hopping unit. In some embodiments, there may be a period of time between an end location of the former frequency hopping unit in two adjacent frequency hopping units and a start location of the latter frequency hopping unit.

A distribution of the N frequency hopping units in the time window is related to the start location of the 1$^{st}$ frequency hopping unit, the length of each frequency hopping unit, a periodicity of each frequency hopping unit, and the quantity N of frequency hopping units. The terminal apparatus may determine a location of each frequency hopping unit in the time window based on the start location of the 1$^{st}$ frequency hopping unit, the length of each frequency hopping unit, the periodicity of each frequency hopping unit, and the quantity N of frequency hopping units, to receive a reference signal in a time unit that is in each frequency hopping unit and that is used to transmit a reference signal.

One or more of the start location of the 1$^{st}$ frequency hopping unit, the length of each frequency hopping unit, the periodicity of each frequency hopping unit, or the quantity N of frequency hopping units may be configured by the network apparatus by using signaling. For example, in S403 (not shown) in the communication method 400, the network apparatus sends configuration information to the terminal apparatus, where the configuration information includes one or more of the following parameters: the length of the first frequency hopping unit, a start location of the first frequency hopping unit, a periodicity of the first frequency hopping unit, or a quantity of first frequency hopping units. These parameters may be configured for the terminal apparatus by using one piece of signaling, or may be configured for the terminal apparatus by using a plurality of pieces of signaling.

One or more of these parameters may be predefined/predefined, or may be determined by another parameter. Therefore, S403 is not a mandatory step. The following uses the first frequency hopping unit as an example to separately describe the start location of the 1st frequency hopping unit, the length of each frequency hopping unit, the periodicity of each frequency hopping unit, or the quantity N of frequency hopping units.

(1) The length of the first frequency hopping unit may be predefined, or may be configured by the network apparatus, or may be determined by the terminal apparatus based on some parameters. The following describes the manners of determining the length of the first frequency hopping unit by using different examples.

**Manner 1-1:** The length of the first frequency hopping unit is predefined.

For example, the length of the first frequency hopping unit is M slots, and M is an integer greater than or equal to 1. When the length of the first frequency hopping unit is M slots, the terminal apparatus performs frequency hopping in a unit of M slots, and receives the reference signal at a frequency in the M slots. For example, the terminal apparatus receives the reference signal on F symbols in the M slots.

A value of M is related to switching duration of the terminal apparatus. For example, as shown in Table 1, the switching time of the terminal apparatus may be less than one slot, or may be greater than one slot. In this case, when the switching time of the terminal apparatus is less than one slot, M may be equal to 1, so that the terminal apparatus can implement many times of frequency hopping in the time window. Certainly, when the switching time of the terminal apparatus is less than one slot, M may alternatively be greater than 1, so that sufficient resources are reserved for the reference signal. When the switching time of the terminal apparatus is greater than one slot, M may be greater than or equal to 2, so that the terminal apparatus receives the reference signal in one frequency hopping unit. For example, it may be defined that the terminal apparatus operates in FR1, and the length of the first frequency hopping unit is one slot; or the terminal apparatus operates in FR2, and the length of the first frequency hopping unit is two slots, or the length of the first frequency hopping unit is four slots.

It should be noted that an example in which the length of the first frequency hopping unit is the M slots is used in embodiments of this application. In a possible implementation, it may alternatively be defined that the length of the first frequency hopping unit is L symbols or a period of time. For example, it may be defined that the terminal apparatus operates in FR1, and the length of the first frequency hopping unit is 1 millisecond (ms); or the terminal apparatus operates in FR2, and the length of the first frequency hopping unit is 0.5 ms.

The F symbols are duration used to transmit a reference signal in the M slots. A length of the F symbols may be a length of the M slots minus a period of time (for example, second duration). The second duration includes time used by terminal apparatus for switching, or the second duration may be used by the terminal apparatus to perform frequency switching.

F may be predefined, or may be obtained by the terminal apparatus through calculation based on the switching time and the length of the first frequency hopping unit. For example, F satisfies: F=floor(length of the first frequency hopping unit-first switching time), where floor is rounding down. Alternatively, F may satisfy: F=length of the first frequency hopping unit-first switching time. Alternatively, F may satisfy: F=length of the first frequency hopping unit-ceil(first switching time), where ceil is rounding up. For example, if the length of the first frequency hopping unit is two slots, one slot includes 14 symbols, and the first switching time is 16 symbols, F may be 12, that is, F=14×2-16.

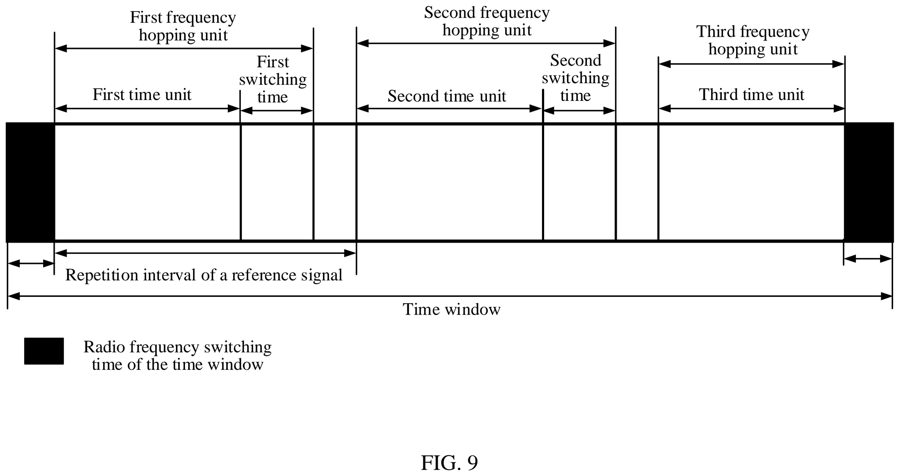

**Manner 1-2:** The length of the first frequency hopping unit is determined by the terminal apparatus based on the some parameters. For example, the length of the first frequency hopping unit may be determined based on one or more of the following: a capability of the terminal apparatus, switching time of the terminal apparatus, a repetition interval of the reference signal, a subcarrier spacing of the reference signal, or a time interval between different hops of the reference signal. The repetition interval of the reference signal is a time interval between two adjacent repeated transmissions, as shown in FIG. 9. FIG. 9 illustrates an example in which the repetition interval of the reference signal is a time interval between start locations of the two adjacent repeated transmissions. The repetition interval of the reference signal may alternatively be a time interval between end locations of the two adjacent repeated transmissions. The time interval between different hops of the reference signal is a time interval between start locations/end locations of reference signal resources of two adjacent hops. Still using the example in FIG. 9, an $i^{th}$ hop of the reference signal is located in the first time unit in the first frequency hopping unit, an $(i+1)^{th}$ hop of the reference signal is located in the third time unit in the third frequency hopping unit, and the time interval between different hops of the reference signal may be an interval between a start location of the first time unit and a start location of the third time unit.

For example, if the switching time of the terminal apparatus is less than one slot, the length of the first frequency hopping unit may be one slot; or if the switching time of the terminal apparatus is greater than one slot, the length of the first frequency hopping unit may be two slots. Optionally, if the switching time of the terminal apparatus is less than or equal to eight symbols, the length of the first frequency hopping unit is one slot; or if the switching time of the terminal apparatus is greater than or equal to eight symbols, the length of the first frequency hopping unit is two slots.

For example, the capability of the terminal apparatus is (N3, T3) described above, and the terminal apparatus may determine that the length of the first frequency hopping unit is T3.

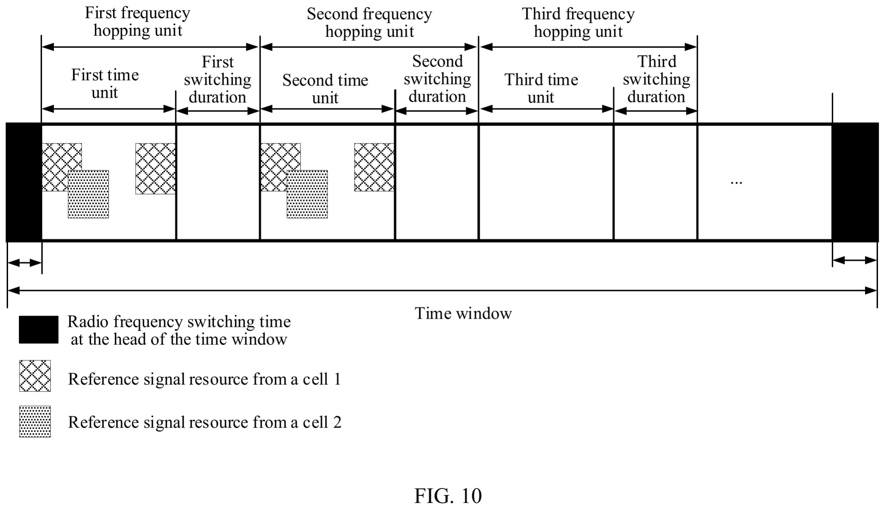

For example, the length of the first frequency hopping unit is the repetition interval of the reference signal (for example, Q slots). For another example, the length of the first frequency hopping unit is the repetition interval of the reference signal plus one slot. For another example, the length of the first frequency hopping unit is a maximum value of the repetition interval of the reference signal. It may be understood that reference signals in the time window may include reference signals from different cells, and repetition intervals of the reference signals of the different cells may be different. As shown in FIG. 10, a repetition interval of a reference signal from a cell 2 is greater than a repetition interval of a reference signal from a cell 1, and the length of the first frequency hopping unit may be the repetition interval of the reference signal from the cell 2.

(2) The periodicity of the first frequency hopping unit may be predefined, or may be configured by the network apparatus, or may be determined by the terminal apparatus based on some parameters. The following describes the manners of determining the periodicity of the first frequency hopping unit by using different examples.

**Manner 2-1:** The periodicity of the first frequency hopping unit may be predefined.

For example, the periodicity of the first frequency hopping unit may be P slots or P symbols, and P is an integer greater than or equal to 1. For example, the periodicity of the first frequency hopping unit may be the length of the first frequency hopping unit, so that there are a maximum quantity of frequency hopping units in the time window, thereby enabling the terminal apparatus to perform frequency hopping to a maximum extent.

For example, the periodicity of the first frequency hopping unit is a repetition interval of the reference signal (for example, Q slots), and the repetition interval is a quantity of slots between two adjacent repeated transmissions.

For another example, the periodicity of the first frequency hopping unit is the repetition interval of the reference signal plus one slot. For another example, the periodicity of the first frequency hopping unit is a maximum value of the repetition interval of the reference signal.

**Manner 2-2:** The periodicity of the first frequency hopping unit may alternatively be determined based on one or more of the following: a capability of the terminal apparatus, switching time of the terminal apparatus, a repetition interval of the reference signal, a subcarrier spacing of the reference signal, or a time interval between different hops of the reference signal. For a manner of determining the periodicity of the first frequency hopping unit, refer to the foregoing manner of determining the length of the first frequency hopping unit. Details are not described herein again.

(3) Start location of the first frequency hopping unit in the time window.

**Manner 3-1:** The start location of the first frequency hopping unit in the time window is predefined.

For example, the start location of the first frequency hopping unit in the time window is a start location of the time window, as shown in FIG. 6. For another example, there is first duration between the start location of the first frequency hopping unit in the time window and a start location of the time window. Optionally, the first duration may be radio frequency switching time at the head of the time window, as shown in FIG. 5 and FIG. 7. Optionally, the start location of the first frequency hopping unit in the time window is a location of a $1^{st}$ slot after the radio frequency switching time at the head of the time window.

**Manner 3-2:** The start location of the first frequency hopping unit in the time window is determined based on a configuration of the reference signal. For example, the network apparatus configures a start location of a reference signal resource and a periodicity of the reference signal resource, and the start location of the first frequency hopping unit in the time window may be the start location of the reference signal resource in the time window. For example, the start location of the first frequency hopping unit in the time window is a start location of a slot in which an earliest start location in start locations of all reference signals is located.

(4) The quantity N of frequency hopping units in the time window may be predefined, or may be configured by the network apparatus, or may be determined by the terminal apparatus based on some parameters. The following describes the manners of determining N by using different examples.

**Manner 4-1:** N may be predefined.

**Manner 4-2:** N is related to a frequency hopping capability of the terminal apparatus, or N has a mapping relationship with a frequency hopping capability of the terminal apparatus. For example, a maximum value of N may be ceil(processing frequency hopping bandwidth/(processing reference signal bandwidth-bandwidth per repetition)), and ceil is rounding up. For example, if the processing frequency hopping bandwidth is 100 MHz, the processing reference signal bandwidth is 20 MHz, and the bandwidth per processing repetition is 5 M, N is less than or equal to 6.

**Manner 4-3:** N is determined based on an effective length of the time window and the length of the first frequency hopping unit, where the effective length of the time window is the time window minus switching time of the time window. It may be understood that, if a unit of the effective length of the time window is different from a unit of the length of the first frequency hopping unit, the unit of the effective length of the time window and the unit of the length of the first frequency hopping unit need to be converted into a same unit. For example, the length of the first frequency hopping unit is in a unit of slots, and the effective length of the time window is in a unit of milliseconds (ms). In this case, the effective length of the time window may be converted into slots.

For example, a maximum value $N_{hop,max}$ of N satisfies: $N_{hop,max}$=floor(effective length of the time window/length of the first frequency hopping unit), where floor is rounding down.

**Manner 4-4:** N is determined based on an effective length of the time window, a length of the first time unit, and a length of the first frequency hopping unit.

For example, a maximum value $N_{hop,max}$ of N satisfies: $N_{hop,max}$=floor((effective length of the time window-length of the first time unit)/length of the first frequency hopping unit)+ 1, where floor is rounding down.

The terminal apparatus may determine the distribution of the N frequency hopping units in the time window based on the start location of the 1st frequency hopping unit, the length of each frequency hopping unit, the periodicity of each frequency hopping unit, or the quantity N of frequency hopping units, and receive the reference signal from the network apparatus in the N frequency hopping units in the frequency hopping manner. It may be understood that a quantity of times that the terminal apparatus performs switching in the time window does not exceed N. In other words, N is a maximum quantity of hops of the terminal apparatus in the time window.

A quantity $N_{hop}$ of switching times/hops of the terminal apparatus in the time window is number of hops UE can perform within a single MG occasion. It depends on PRS resource configuration and switching time, and we will discuss its definition next. $N_{hop}$ may be determined based on one or more of the following: N, a quantity P of valid resources of the reference signal, a quantity of times that the reference signal resource falls within the N frequency hopping units, the repetition interval Q of the reference signal, the length $K$ of the first frequency hopping unit, N3, the length of the time window, a length of radio frequency switching time of the time window, the start location of the first frequency hopping unit, or the length of the first time unit. N3 indicates a time length that is for processing the reference signal and that is supported by the terminal device, and may represent a frequency hopping storage capability of the terminal device.

In a possible implementation, $N_{hop}$ is less than or equal to $\left\lfloor \dfrac{N3}{L_{per-hop}} \right\rfloor$. $L_{per-hop}$ is reference signal resource duration in the first time unit in the first frequency hopping unit.

In a possible implementation, $N_{hop}$ is less than or equal to $N_{hops,effect}$. $N_{hops,effect}$ is a quantity of hops determined by the terminal device in a time window based on a resource configuration of the reference signal and radio frequency switching time.

For example, $N_{hop}$ satisfies: $N_{hop} = min\left(N_{hops,effect}, \left\lfloor \dfrac{N3}{L_{per-hop}} \right\rfloor, N_{hop,max}\right)$ . $N_{hops,effect}$ is a quantity of hops determined by the terminal device in a time window based on a resource configuration and radio frequency switching time, and $L_{per-hop}$ is reference signal resource duration in the first time unit in the first frequency hopping unit.

Optionally, $N_{hops,effect}$ is related to one or more of the following: a length of the time window, radio frequency switching time reserved in the time window, a start location of a 1st first frequency hopping unit in the time window, the length of the first frequency hopping unit, or the length of the first time unit.

In an example, $N_{hops,effect}$ satisfies: $N_{hops,effect} = \sum_i min(N_{rep,n}^{PRS}, N_{rep}^{max})$ . n is an nth hop in the time window, or n indicates an nth frequency hopping unit; $N_{rep,n}^{PRS}$ is a quantity of repetitions of a reference signal resource that is unmuted in signal receiving time in the nth hop or the nth frequency hopping unit; and $N_{rep}^{max}$ is related to the length of the first frequency hopping unit or a quantity of hops in a time unit.

In a possible implementation, when the length of the first frequency hopping unit is seven symbols, or the quantity of hops in the time unit is 2, $N_{rep}^{max} = 2$; or when the length of the first frequency hopping unit is not seven symbols, or the quantity of hops in the time unit is not 2, $N_{rep}^{max} = 1$.

For example, when the length of the first frequency hopping unit is seven symbols, and the quantity of hops in the slot (slot) is 2, for 15k, if $N_{rep}^{PRS}$ represents an integer quantity of slots obtained after frequency hopping switching time is subtracted from the time window, $N_{hops,effect} = 2 * N_{rep}^{PRS} + 2$; or $N_{hops,effect} = 2 * N_{rep}^{PRS} + 1$. A start location of the slot is the same as downlink timing of the terminal device. For another example, when the length of the first frequency hopping unit is 14 symbols, and the quantity of hops in the slot is 1, for 15k, if $N_{rep}^{PRS}$ represents an integer quantity of slots obtained after frequency hopping switching time is subtracted from the time window,

$$N_{hops,effect} = N_{rep}^{PRS} + 1$$.

In another example, $N_{hops,effect}$ satisfies:

$$N_{hops,effect} = floor\left(\frac{\text{first value} - \text{second value} - \text{third value} - \text{fourth value}}{\text{length of the first frequency hopping unit}}\right) + 1$$ ; or $N_{hops,effect}$ satisfies:

$$N_{hops,effect} = floor\left(\frac{\text{first value} - \text{second value} - \text{third value}}{\text{length of the first frequency hopping unit}}\right)$$. The first value is the length of the time window, the second value is the radio frequency switching time reserved in the time window, the third value is the start location of the 1st first frequency hopping unit in the time window, and the fourth value is the length of the first time unit.

In a possible implementation, the terminal device needs to complete measurement on a plurality of frequencies, reference signal resource duration in each time window periodicity in a reference signal resource validity periodicity is different, and a quantity $N_{hop,k,j}$ of hops of the terminal device at a $k^{th}$ frequency in a $j^{th}$ time window satisfies the following formula:

$$N_{hop,k,j} = min\left(N_{hops,effect,k,j}, N_{store,k,j}, N_{hop,max,k}\right).$$

$N_{hops,effect,k,j}$ is a quantity of hops determined by the terminal device in the $j^{th}$ time window of a $k^{th}$ frequency layer based on a configuration of the reference signal and radio frequency switching time, $N_{hop,max,k}$ is a maximum value of a quantity of hops supported by the terminal device at the $k^{th}$ frequency layer, $N_{store,k,j}$ is related to N3, $L_{per-hop,k,j}$ and/or $L_{per-rop,k,j,n}$, $L_{per-hop,k,j}$ is reference signal resource duration in a first time unit in a first frequency hopping unit in the $j^{th}$ time window in a reference signal resource validity periodicity $T_{available\_PRS,k}$ of the $k^{th}$ frequency layer, and $L_{per-hop,k,j,n}$ is reference signal resource duration in an $n^{th}$ frequency hopping unit/a first time unit in an $n^{th}$ hop in the $j^{th}$ time window in the reference signal resource validity periodicity $T_{available\_PRS,k}$ of the $k^{th}$ frequency layer.

Optionally, a quantity $N_{hop,k,j}$ of hops of the terminal device in any time window of the $k^{th}$ frequency layer is a minimum value of all $N_{hop,k,j}$ or a minimum value of all $N_{hop,k,j}$ of the $j^{th}$ frequency layer. $N_{store,k,j} = \left\lfloor \frac{N3}{L_{per-hop,k,j}} \right\rfloor$ , or

$N_{store,k,j}$ is maximum $N_{store,k,j}$ that satisfies $\sum_{n=1}^{N_{store,k,j}} L_{per-hop,k,j,n} \leq N3$.

$L_{per-hop,k,j}$ is a maximum value of all $L_{per-hop,k,j,n}$(n=1, 2, 3, ...) in the $j^{th}$ time window in the reference signal resource validity periodicity $T_{available\_PRS,k}$ of the $k^{th}$ frequency layer; or $L_{per-hop,k,j}$ is any value of all $L_{per-hop,k,j,n}$(n=1, 2, 3, ...) in the $j^{th}$ time window in the reference signal resource validity periodicity $T_{available\_PRS,k}$ of the $k^{th}$ frequency layer; or $L_{per-hop,k,j}$ is a maximum value of all $L_{per-hop,k,j,n}$(n=1, 2, 3, ...) in all time windows in the reference signal resource validity periodicity $T_{available\_PRS,k}$ of the $k^{th}$ frequency layer.

An effective length $L_{available-PRS,k}$ of the reference signal in the time window of the $k^{th}$ frequency layer satisfies:

$$L_{available\_PRS,k} = \sum_{j=1}^{J} N_{hop,k,j} * L_{per-hop,k,j}; \text{ or } L_{available\_PRS,k} = \sum_{j=1}^{J} \sum_{n=1}^{N_{hop,k,j}} L_{per-hop,k,j,n}.$$

In an implementation, the length $K$ of the first frequency hopping unit satisfies: $K = max(K', Q)$, where when the switching time of the terminal device is less than or equal to a preset threshold, $K'=1$; or otherwise, $K'=2$. For example, the preset threshold may be seven symbols. In another implementation, $K=a \times Q$, where a is a coefficient, and a is related to switching time. For example, when the switching time is less than or equal to a threshold, a=1; or when the switching time is greater than a threshold, a=2 or another possible value.

The reference signal resource in the time window is at a granularity of a slot. For example, the reference signal is a PRS, and the quantity $P$ of repetitions of the reference signal resource in the time window is the number of PRS inter-slot repetitions within a single MG instance, excluding the gap retuning times.

In embodiments of this application, the quantity of times that the reference signal resource falls within the N frequency hopping units does not include a quantity of times that the reference signal resource repeatedly falls within the N frequency hopping units. In other words, a quantity of times that the reference signal resource repeatedly falls within one frequency hopping unit is 1. The actual quantity $N_{hop}$ of switching times/hops of the terminal apparatus in the time window is further related to a resource configuration, for example, $N_{hop}$ is related to one or more of a quantity of configured symbols, a pilot spacing, a quantity of repetitions of the reference signal, the repetition interval of the reference signal, a resource expected (expected) reference signal time difference (reference signal time difference, RSTD), and an expected RSTD uncertainty. The first duration is also related to one or more of the foregoing resource configurations.

In addition, repetition intervals between same frequency layers may be different, and repetition quantities between same frequency layers may be different. When there are a plurality of resources, the repetition interval $Q$ of the reference signal is a least common multiple of repetition intervals on the plurality of resources or a maximum value of repetition intervals on the plurality of resources. When there are a plurality of resources, the quantity $P$ of repetitions of the reference signal resource in the time window is a minimum value or a maximum value in quantities of valid resources on the plurality of resources.

In some examples, $N_{hop}$ may be N, that is, the actual quantity of hops of the terminal apparatus is the quantity of frequency hopping units, so that frequency hopping can be implemented to a maximum extent. Alternatively, $N_{hop}$ is a maximum or minimum quantity of times that a reference signal resource falls within the N frequency hopping units. Alternatively, $N_{hop}$ is a quantity of repetitions of the reference signal resource, or $N_{hop}$ is a minimum value of the quantity of repetitions of the reference signal and N. Alternatively, $N_{hop}$ is a minimum value of a maximum quantity of hops supported by the terminal device, N, and the quantity of repetitions of the reference signal.

For example, $N_{hop}$ satisfies the following formula: $N_{hop} = min\left(\left\lceil \frac{(P-1) \times Q}{K} \right\rceil + 1, N_{hop,max}\right)$, where $P$ is the quantity of repetitions of the reference signal resource in the time window, $Q$ is the repetition interval of the reference signal, $K$ is the length of the first frequency hopping unit, and $N_{hop,max}$ is the maximum value of the quantity of hops supported by the terminal device.

The maximum value of the quantity of hops (that is, a maximum quantity of hops) supported by the terminal device is related to maximum bandwidth across hops supported by the terminal device. For example, the maximum value of the quantity of hops supported by the terminal device and the maximum bandwidth across hops supported by the terminal device satisfy:

$$BW_{PRS.max} = N_{hop,max} \times BW_{per-hop} - (N_{hop,max} - 1) \times BW_{overlap};$$

or

$$N_{hop,max} = \left\lceil \frac{BW_{PRS.max} - BW_{overlap}}{BW_{per-hop} - BW_{overlap}} \right\rceil.$$

$BW_{PRs.max}$ is the maximum bandwidth across hops supported by the terminal device, $N_{hop,max}$ is the maximum value of the quantity of hops supported by the terminal device, $BW_{overlap}$ is overlapping bandwidth across hops (the BW of the overlapping RB which is under discussion in RAN1), and $BW_{per-hop}$ is maximum bandwidth that can be received by the terminal device per hop (the supported BW per hop which is UE capability (e.g. 20MHz)).

$BW_{PRs.max}$ may be maximum bandwidth of the reference signal, or bandwidth across a plurality of hops of the terminal device. For example, $BW_{PRs.max}$ is second bandwidth described above. In other words, a meaning of the second bandwidth described above is also applicable to $BW_{PRS.max}$.

$BW_{per-hop}$ may be bandwidth per hop of the terminal device, or bandwidth that can be used by the terminal device to process the reference signal, or maximum bandwidth that can be processed by the terminal device. For example, $BW_{per-hop}$ is first bandwidth described above. In other words, a meaning of the first bandwidth described above is also applicable to $BW_{per-hop}$.

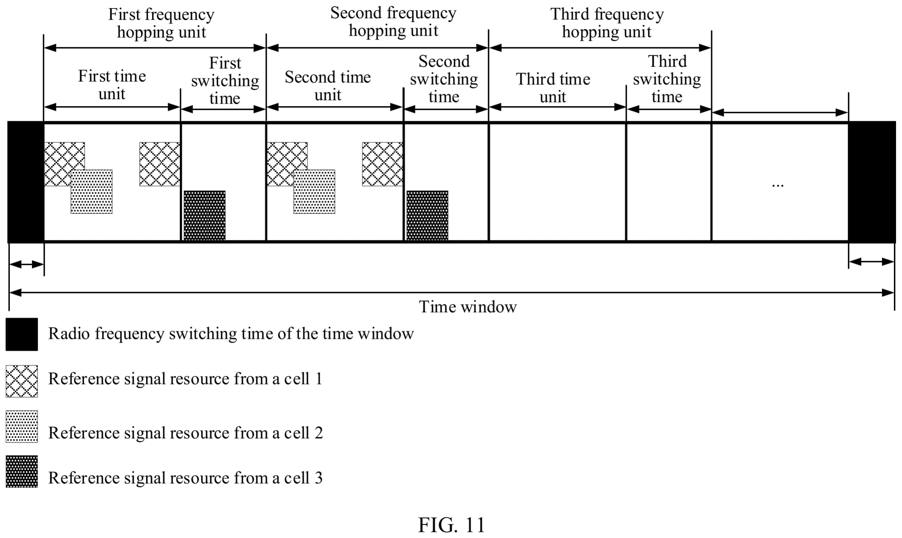

For ease of understanding, the following describes how to determine $N_{hop}$ with reference to FIG. 11 to FIG. 14.

FIG. 11 is a diagram of frequency hopping in a time window. FIG. 11 illustrates an example in which the time window includes three frequency hopping units (that is, a first frequency hopping unit to a third frequency hopping unit).

In FIG. 11, a length of each frequency hopping unit may be a maximum value of repetition intervals of all reference signal resources. It can be learned from FIG. 11 that a quantity of times that a reference signal resource from a cell 1 falls within the first frequency hopping unit is 1, and a quantity of times that the reference signal resource from the cell 1 falls within the second frequency hopping unit is 1, that is, a quantity of times that the reference signal resource from the cell 1 falls within the three frequency hopping units is 2. A quantity of times that a reference signal resource from a cell 2 falls within the first frequency hopping unit is 1, and a quantity of times that the reference signal resource from the cell 2 falls within the second frequency hopping unit is 1, that is, a quantity of times that the reference signal resource from the cell 1 falls within the three frequency hopping units is also 2. A reference signal resource from a cell 3 falls within the switching time. Therefore, the reference signal resource from the cell 3 is interrupted. The terminal apparatus may determine that $N_{hop}$ is the maximum or minimum quantity of times that the reference signal resource falls within the N frequency hopping units, that is, $N_{hop}=2$.

FIG. 11 is a diagram of frequency hopping in a time window. FIG. 11 illustrates an example in which the time window includes three frequency hopping units (that is, a first frequency hopping unit to a third frequency hopping unit), and a length of each frequency hopping unit is a periodicity of each frequency hopping unit.

In FIG. 11, the length of each frequency hopping unit may be a maximum value of repetition intervals of all reference signal resources. It can be learned from FIG. 11 that a quantity of times that a reference signal resource from a cell 1 falls within the first frequency hopping unit is 1, and a quantity of times that the reference signal resource from the cell 1 falls within the second frequency hopping unit is 1, that is, a quantity of times that the reference signal resource from the cell 1 falls within the three frequency hopping units is 2. A quantity of times that a reference signal resource from a cell 2 falls within the first frequency hopping unit is 1, and a quantity of times that the reference signal resource from the cell 2 falls within the second frequency hopping unit is 1, that is, a quantity of times that the reference signal resource from the cell 2 falls within the three frequency hopping units is also 2. A reference signal resource from a cell 3 falls within the switching time. Therefore, the reference signal resource from the cell 3 is interrupted. The terminal apparatus may determine that $N_{hop}$ is the maximum or minimum quantity of times that the reference signal resource falls within the N frequency hopping units, that is, $N_{hop}=2$.

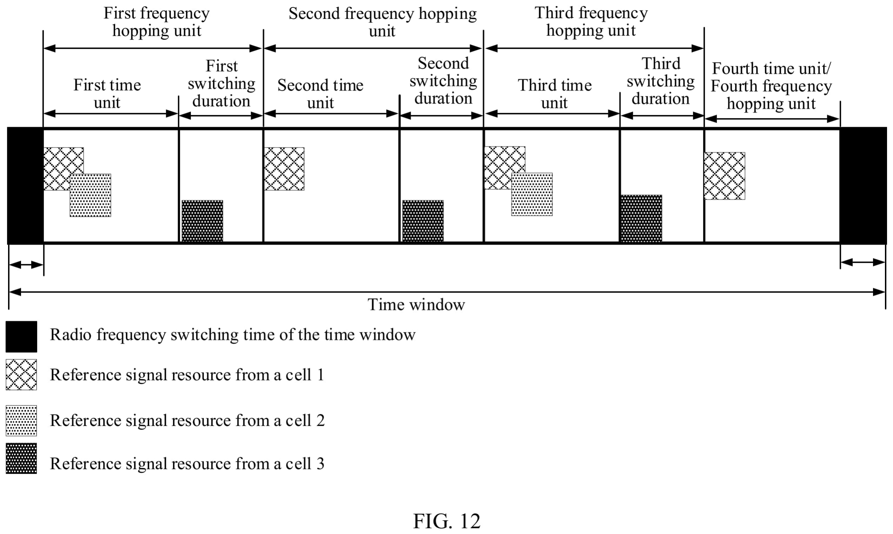

FIG. 12 is a diagram of frequency hopping in a time window. FIG. 12 illustrates an example in which the time window includes four frequency hopping units (that is, a first frequency hopping unit to a fourth frequency hopping unit), and a length of each frequency hopping unit is a periodicity of each frequency hopping unit.

In FIG. 12, the length of each frequency hopping unit may be a maximum value of repetition intervals of all reference signal resources. It can be learned from FIG. 12 that a quantity of times that a reference signal resource from a cell 1 falls within each of the four frequency hopping units is 1, that is, a quantity of times that the reference signal resource from the cell 1 falls within the four frequency hopping units is 4. A quantity of times that a reference signal resource from a cell 2 falls within the first frequency hopping unit is 1, and a quantity of times that the reference signal resource from the cell 2 falls within the second frequency hopping unit is 1, that is, a quantity of times that the reference signal resource from the cell 2 falls within the four frequency hopping units is 2. A reference signal resource from a cell 3 falls within the switching time. Therefore, the reference signal resource from the cell 3 is interrupted. The terminal apparatus may determine that $N_{hop}$ is the maximum quantity of times that the reference signal resource falls within the N frequency hopping units, that is, $N_{hop}=4$; or the terminal apparatus may determine that $N_{hop}$ is the minimum quantity of times that the reference signal resource falls within the N frequency hopping units, that is, $N_{hop}=2$.

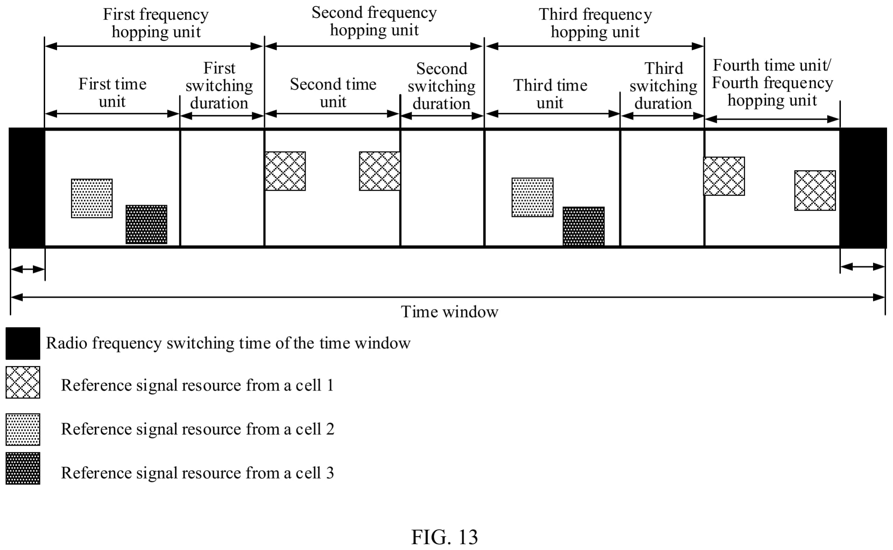

FIG. 13 is a diagram of frequency hopping in a time window. FIG. 13 illustrates an example in which the time window includes four frequency hopping units (that is, a first frequency hopping unit to a fourth frequency hopping unit), and a length of each frequency hopping unit is a periodicity of each frequency hopping unit.

In FIG. 13, the length of each frequency hopping unit may be predefined. It can be learned from FIG. 13 that a quantity of times that a reference signal resource from a cell 1 falls within the second frequency hopping unit is 1, and a quantity of times that the reference signal resource from the cell 1 falls within the fourth frequency hopping unit is 2, that is, a quantity of times that the reference signal resource from the cell 1 falls within the four frequency hopping units is 2. A quantity of times that a reference signal resource from a cell 2 falls within the first frequency hopping unit is 1, and a quantity of times that the reference signal resource from the cell 2 falls within the third frequency hopping unit is 1, that is, a quantity of times that the reference signal resource from the cell 2 falls within the four frequency hopping units is also 2. A quantity of times that a reference signal resource from a cell 3 falls within the first frequency hopping unit is 1, and a quantity of times that the reference signal resource from the cell 3 falls within the third frequency hopping unit is 1, that is, a quantity of times that the reference signal resource from the cell 3 falls within the four frequency hopping units is also 2. The terminal apparatus may determine that $N_{hop}$ is the maximum or minimum quantity of times that the reference signal resource falls within the N frequency hopping units, that is, $N_{hop}=2$.

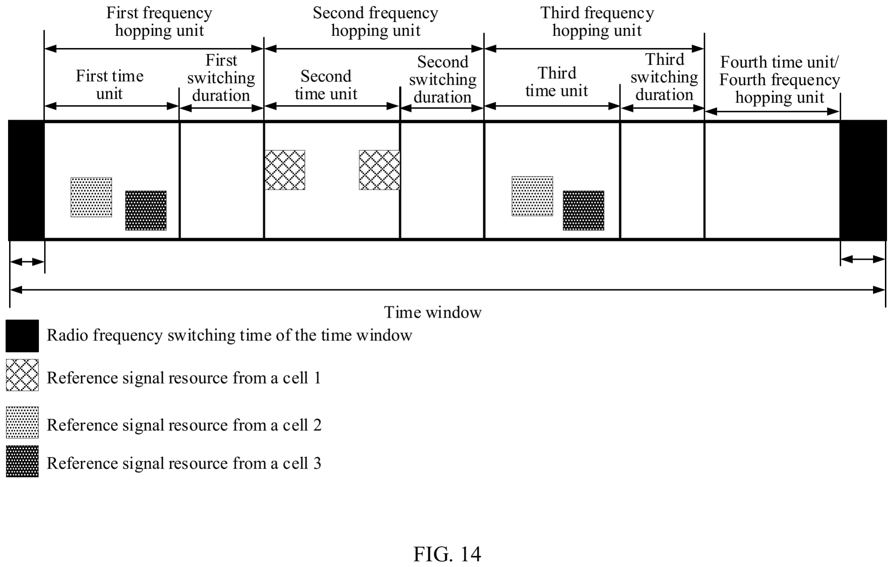

FIG. 14 is a diagram of frequency hopping in a time window. FIG. 14 illustrates an example in which the time window includes four frequency hopping units (that is, a first frequency hopping unit to a fourth frequency hopping unit), and a length of each frequency hopping unit is a periodicity of each frequency hopping unit.

In FIG. 14, the length of each frequency hopping unit may be predefined. It can be learned from FIG. 14 that a quantity of times that a reference signal resource from a cell 1 falls within the second frequency hopping unit is 1, that is, a quantity of times that the reference signal resource from the cell 1 falls within the four frequency hopping units is 1. A quantity of times that a reference signal resource from a cell 2 falls within the first frequency hopping unit is 1, and a quantity of times that the reference signal resource from the cell 2 falls within the third frequency hopping unit is 1, that is, a quantity of times that the reference signal resource from the cell 2 falls within the four frequency hopping units is 2. A quantity of times that a reference signal resource from a cell 3 falls within the first frequency hopping unit is 1, and a quantity of times that the reference signal resource from the cell 3 falls within the third frequency hopping unit is 1, that is, a quantity of times that the reference signal resource from the cell 3 falls within the four frequency hopping units is also 2. The terminal apparatus may determine that $N_{hop}$ is the maximum quantity of times that the reference signal resource falls within the N frequency hopping units, for example, $N_{hop}=2$.

The terminal apparatus receives the reference signal from the network apparatus in the time window in the frequency hopping manner. An effective length Lprs of the reference signal processed by the terminal apparatus in the time window may be a sum of lengths of reference signals in all frequency hopping units, that is, Lprs=sum(Lper_hop), where Lper_hop is a length of a reference signal in one frequency hopping unit, and sum is summation. Optionally, Lper_hop is floor(reference signal duration in the time unit used to transmit the reference signal in the frequency hopping unit), and floor is rounding up. A unit of Lper_hop may be a symbol or a slot. If the effective lengths of the reference signals in the frequency hopping units are the same, Lprs=Nhop×Lper_hop.

Still using the example in FIG. 11, the lengths of the reference signals in the frequency hopping units are the same, the quantity of hops of the terminal apparatus in the time window is 2, and the terminal apparatus may perform frequency hopping in the first frequency hopping unit and the second frequency hopping unit, where Lprs=quantity of hops×Lper_hop, that is, Lprs=2×Lper_hop.

For FIG. 12, assuming that the quantity of hops of the terminal apparatus in the time window is 4, the terminal apparatus may perform frequency hopping in each frequency hopping unit, or the terminal apparatus may perform frequency hopping in the first frequency hopping unit and the third frequency hopping unit. Effective lengths of reference signals in different frequency hopping units may be different. Therefore, Lprs=sum(Lper_hop); or Lprs=Nhop×Lper_hop, where Lper_hop is an effective length of a reference signal of the first frequency hopping unit.

For FIG. 13, assuming that the quantity of hops of the terminal apparatus in the time window is 2, the terminal apparatus may perform frequency hopping in the first frequency hopping unit and the third frequency hopping unit, or the terminal apparatus may perform frequency hopping in the second frequency hopping unit and the fourth frequency hopping unit. Effective lengths of reference signals in different frequency hopping units may be different. Therefore, Lprs=sum(Lper_hop).

For FIG. 14, assuming that the quantity of hops of the terminal apparatus in the time window is 2, the terminal apparatus may perform frequency hopping in the first frequency hopping unit and the third frequency hopping unit, where Lprs=sum(Lper_hop), that is, the terminal apparatus may receive a reference signal in the first frequency hopping unit to the third frequency hopping unit. Alternatively, Lprs=$N_{hop}$×Lper_hop, where Lper_hop is an effective length of a reference signal of the first frequency hopping unit.

In embodiments of this application, the terminal apparatus performs frequency hopping in the time window in a unit of frequency hopping units. Duration that corresponds to each frequency hopping unit and that is used to transmit a positioning reference signal does not overlap switching time, and switching time corresponding to one frequency hopping unit does not overlap duration that corresponds to an adjacent frequency hopping unit and that is used to transmit a positioning reference signal. Therefore, when the terminal apparatus receives the reference signal from the network apparatus in the frequency hopping manner, other reference signal resources on the entire bandwidth are not interrupted due to switching, thereby reducing a waste of reference signal resources. In addition, because the reference signal resource is interrupted less frequently, the terminal device can complete more times of frequency hopping in a period of time, increasing bandwidth of the received reference signal.

It may be understood that the switching time of the terminal apparatus may be related to the capability of the terminal apparatus. Embodiments of this application relate to one or more capabilities of the terminal apparatus, for example, a bandwidth capability of the terminal apparatus to process a reference signal, a capability of the terminal apparatus to buffer a reference signal, a capability of the terminal apparatus to process a reference signal with duration of N in unit duration, or a quantity of reference signals processed by the terminal apparatus in unit time.

(1) The bandwidth capability of the terminal apparatus to process the reference signal is maximum bandwidth that can be used by the terminal apparatus to process the reference signal.

For example, the reference signal is a positioning reference signal. In a non-frequency hopping mode, when the terminal apparatus operates in FR1, the maximum bandwidth that can be used by the terminal apparatus to process the positioning reference signal is {5, 10, 20, 40, 50, 80, 100}; or when the terminal apparatus operates in FR2, the maximum bandwidth that can be used by the terminal apparatus to process the positioning reference signal is {50, 100, 200, 400}.

(2) The capability of the terminal apparatus to buffer the reference signal means that a granularity/level of buffering the reference signal by the terminal apparatus is a symbol or a slot.

In a non-frequency hopping mode, the capability of the terminal apparatus to buffer the reference signal at the symbol is referred to as type 1 (Type 1): sub-slot/symbol level buffering; and the capability of the terminal apparatus to buffer the reference signal at the slot is referred to as type 2 (Type 2): slot level buffering.

(3) The capability of the terminal apparatus to process the reference signal with the duration of N in the unit duration (for example, T milliseconds) means that the terminal apparatus can process a reference signal with specific duration per unit duration.

For example, the reference signal is a positioning reference signal, and the unit duration is T ms. In a non-frequency hopping mode, the terminal apparatus processes a reference signal with duration of N ms every T ms (Duration of DL PRS symbols N in units of ms a UE can process every T ms assuming maximum DL PRS bandwidth in MHz, which is supported and reported by UE), where T: {8, 16, 20, 30, 40, 80, 160, 320, 640, 1280} ms; and N: {0.125, 0.25, 0.5, 1, 2, 4, 6, 8, 12, 16, 20, 25, 30, 32, 35, 40, 45, 50} ms. 15k every 4 ms means four segments, and 60k every 4 ms means 16 segments.

(4) The capability of the terminal apparatus to process the quantity of reference signals in the unit duration (for example, a single slot) is a maximum quantity of reference signal resources that can be processed by the terminal apparatus in the unit duration.

For example, the unit duration is one slot. In a non-frequency hopping mode, when the terminal apparatus operates in FR1, and the SCS is 15 kHz, 30 kHz, or 60 kHz, the maximum quantity of reference signal resources that can be processed by the terminal apparatus in each slot is {1, 2, 4, 6, 8, 12, 16, 24, 32, 48, 64}; or when the terminal apparatus operates in FR2, and the SCS is 60 kHz or 120 kHz, the maximum quantity of reference signal resources that can be processed by the terminal apparatus in each slot is {1, 2, 4, 6, 8, 12, 16, 24, 32, 48, 64}.

One or more of the foregoing capabilities vary depending on whether the terminal apparatus performs frequency hopping. A capability of the terminal apparatus in a non-frequency hopping mode is referred to as a non-frequency hopping capability of the terminal apparatus, and a capability of the terminal apparatus in a frequency hopping mode is referred to as a frequency hopping capability of the terminal apparatus. The non-frequency hopping capability of the terminal apparatus indicates a capability supported when the terminal apparatus receives and/or sends a reference signal without using a frequency hopping manner, or the non-frequency hopping capability is a capability supported when the terminal apparatus receives and/or sends a reference signal at one receive frequency. The frequency hopping capability of the terminal apparatus is a capability supported when the terminal apparatus receives and/or sends a reference signal in a frequency hopping manner.

In embodiments of this application, the frequency hopping capability of the terminal apparatus includes one or more capabilities of the terminal apparatus in a frequency hopping mode: a bandwidth capability of the terminal apparatus to process a reference signal, a capability of the terminal apparatus to buffer a reference signal, a capability of the terminal apparatus to process a reference signal with duration of N in a unit duration, or a quantity of reference signals processed by the terminal apparatus in unit time.

In the frequency hopping mode, the bandwidth capability of the terminal apparatus to process the reference signal is maximum bandwidth across hops that can be processed by the terminal apparatus, and/or maximum data collection bandwidth supported by the terminal apparatus. "Data collection" refers to reference signal collection. A bandwidth sampling capability of the terminal apparatus may reuse a capability of the terminal apparatus to process the maximum reference signal bandwidth. The capability of the terminal apparatus to buffer the reference signal in the frequency hopping mode may reuse the capability of the terminal apparatus to buffer the reference signal in the non-frequency hopping mode. The capability of the terminal apparatus to process the reference signal with the duration of N in the unit duration is a reference signal with specific duration that can be processed by the terminal apparatus in the frequency hopping mode. The capability of the quantity of reference signal resources processed by the terminal apparatus in each slot is a maximum quantity of reference signal resources processed by the terminal apparatus in each slot in the frequency hopping mode.

In embodiments of this application, the terminal apparatus may report the frequency hopping capability of the terminal apparatus to the network device. Correspondingly, the network device receives the frequency hopping capability of the terminal apparatus or receives capability information. For example, the terminal apparatus sends the capability information to the network device, where the capability information includes ($N3$, T3), where $N3$ indicates a time length that is for processing the reference signal and that is supported by the terminal apparatus, and T3 indicates time required by the terminal apparatus to process the reference signal of $N3$. Optionally, T3 indicates time required for storing and processing the reference signal of $N3$ by the terminal apparatus. It should be noted that $N3$ is a total time length that is for processing the reference signal and that is supported by the terminal apparatus. For example, in a period of time, processing time of the reference signal may be discontinuous, and $N3$ is a sum of processing time of all reference signals in the period of time.

$N3$ is determined based on first bandwidth, and T3 is determined based on second bandwidth. For example, the first bandwidth is bandwidth per hop of the terminal apparatus, or the first bandwidth is bandwidth that can be used by the terminal device to process the reference signal, or the first bandwidth is maximum bandwidth that can be processed by the terminal apparatus. The second bandwidth is maximum bandwidth of the reference signal, or the second bandwidth is bandwidth across a plurality of hops of the terminal apparatus, or the second bandwidth is maximum bandwidth across hops supported by the terminal apparatus.

Alternatively, the capability information includes ($N3$, T3), where $N3$ indicates that the terminal apparatus can process a first reference signal with duration (duration) of $N3$, and T3 indicates that the terminal apparatus can process a second reference signal with duration of $N3$ in time T3.

For example, (maximum) bandwidth of the first reference signal is maximum receive bandwidth, and (maximum) bandwidth of the second reference signal is maximum reference signal bandwidth or maximum processing bandwidth supported by the UE. Alternatively, (maximum) bandwidth of the first reference signal is maximum reference signal bandwidth, and (maximum) bandwidth of the second reference signal is maximum reference signal bandwidth.

Optionally, the terminal apparatus may further report the non-frequency hopping capability of the terminal apparatus to the network device. For example, the capability information further includes (N, T), where N indicates a time length that is for processing the reference signal and that is supported by the terminal apparatus, and T indicates time required by the terminal apparatus to process the reference signal of N. N is determined based on first bandwidth, and T is determined based on the first bandwidth. Optionally, $N3$ may be the same as N, or $N3$ may be N×quantity of hops.

Alternatively, the non-frequency hopping capability of the terminal apparatus includes (N, T), where (N, T) indicates that the terminal apparatus can process a third reference signal with duration (duration) of N in duration T, or N indicates that the terminal apparatus can process a third reference signal with duration (duration) of N; and T indicates that the terminal apparatus can process the third reference signal with the duration of N in the duration T. For example, (maximum) bandwidth of the third reference signal is maximum receive bandwidth.

In the frequency hopping mode, the terminal apparatus may further report, to the network device, the maximum quantity of hops supported by the terminal apparatus. The terminal apparatus may further report, to the network device, whether the terminal apparatus supports reporting of a one-hop or multi-hop result. The maximum quantity of hops supported by the terminal apparatus is related to a frequency hopping bandwidth processing capability, a reference signal bandwidth processing capability, and bandwidth per repetition. For example, the maximum quantity of hops supported by the terminal apparatus=ceil(processing frequency hopping bandwidth/(processing reference signal bandwidth-bandwidth per repetition)), and ceil is rounding up. For example, if the processing frequency hopping bandwidth is 100 M, the processing reference signal bandwidth is 20 M, and the bandwidth per repetition is 5 M, the maximum quantity of hops supported by the terminal apparatus is 6.

In embodiments provided in this application, the method provided in embodiments of this application is separately described from a perspective of interaction between the terminal apparatus and the network apparatus. The steps performed by the terminal apparatus may be implemented by different functional entities included in the terminal apparatus. The steps performed by the network apparatus may be implemented by different functional entities included in the network apparatus. To implement functions in the method provided in the foregoing embodiments of this application, the terminal apparatus and the network apparatus may include a hardware structure and/or a software module, and the foregoing functions are implemented in a form of a hardware structure, a software module, or a combination of the hardware structure and the software module. Whether a function in the foregoing functions is performed by using the hardware structure, the software module, or the combination of the hardware structure and the software module depends on particular applications and design constraints of the technical solutions.

The following describes, with reference to the accompanying drawings, communication apparatuses for implementing the foregoing method in embodiments of this application. Therefore, all the foregoing content may be used in the following embodiments. Repeated content is not described again.

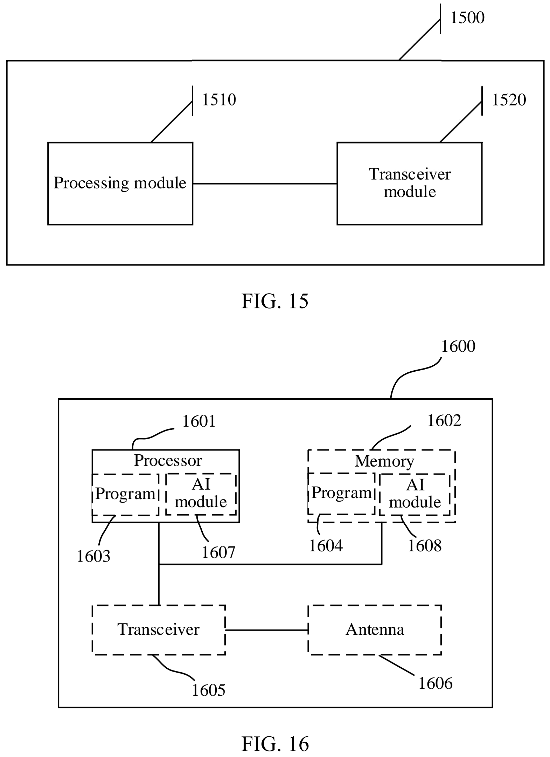

FIG. 15 is a block diagram of a communication apparatus 1500 according to an embodiment of this application. The communication apparatus 1500 may be the network apparatus or the terminal apparatus in the foregoing embodiments. For example, the communication apparatus 1500 may be the network device or the terminal device in FIG. 1. Alternatively, the communication apparatus 1500 is a chip (system) in the network device or a chip (system) in the terminal device. Alternatively, the communication apparatus 1500 is a software module in the network device or the terminal device. The communication apparatus 1500 may correspondingly implement functions or steps implemented by the terminal apparatus or the network apparatus in the foregoing method embodiments. The communication apparatus 1500 may include a processing module 1510 and a transceiver module 1520. Optionally, a storage module may be further included. The storage module may be configured to store instructions (code or a program) and/or data. The storage module may be, for example, a memory. The processing module 1510 and the transceiver module 1520 may be coupled to the storage module. For example, the processing module 1510 may read the instructions (the code or the program) and/or the data in the storage module, to implement the corresponding methods. When the communication apparatus 1500 is the chip in the network device or the chip in the terminal device, the storage module may be a storage module in the chip, for example, a register or a buffer. For example, the storage module may alternatively be a storage module that is in the network device/terminal device and that is located outside the chip, for example, a read-only memory (read-only memory, ROM) or another type of static storage device that can store static information and instructions, or a random access memory (random access memory, RAM). The foregoing units may be independently disposed, or may be partially or completely integrated.

In a possible implementation, the processing module 1510 may be a processor or a controller, for example, may be a general-purpose central processing unit (central processing unit, CPU), a general-purpose processor, a digital signal processor (digital signal processing, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to the content disclosed in this application. Alternatively, the processor may be a combination of processors implementing a computing function, for example, a combination of one or more microprocessors, or a combination of a DSP and a microprocessor. The transceiver module 1520 may be a transceiver, an interface circuit, a bus, a pin, or another possible communication interface, and is configured to receive a signal from another apparatus. For example, when the apparatus is implemented in a form of a chip, the transceiver module 1520 is an interface circuit used by the chip to receive a signal from another chip or apparatus, or is an interface circuit used by the chip to transmit a signal to another chip or apparatus.

In some possible implementations, the communication apparatus 1500 can correspondingly implement behavior and functions of the terminal apparatus in the foregoing method embodiments, for example, implement the method performed by the terminal apparatus in the embodiment in FIG. 4. The communication apparatus 1500 may be a terminal device, or may be a component (for example, a chip or a circuit) used in the terminal device, or may be a chip or a chip group in the terminal device or a part of the chip that is configured to perform a related method function, or may be a software module that can implement the method performed by the terminal apparatus in FIG. 4. This is not limited. For example, the transceiver module 1520 may be configured to perform S401 in the embodiment shown in FIG. 4, and/or configured to support another process of the technology described in this specification. The processing module 1510 may be configured to perform S402 in the embodiment shown in FIG. 4, and configured to perform another process of the technology described in this specification.

In some embodiments, the processing module 1510 is configured to determine a first frequency hopping unit, where the first frequency hopping unit includes a first time unit and first switching time, the first time unit is used to transmit a reference signal, and the first time unit and the first switching time do not overlap in time domain. The transceiver module 1520 is configured to receive the reference signal in the first time unit.

In an optional implementation, the first switching time is used by the terminal device to switch from a first frequency to a second frequency.

In an optional implementation, that the transceiver module 1520 is configured to receive the reference signal in the first time unit includes: The transceiver module 1520 receives the reference signal at the first frequency in the first time unit; and the transceiver module 1520 is further configured to receive the reference signal at the second frequency in a second time unit, where the second time unit is included in a second frequency hopping unit, and the second time unit is used to transmit the reference signal.

In an optional implementation, the second frequency hopping unit further includes second switching time, and the second switching unit and the second time unit do not overlap in time domain.

In an optional implementation, the first frequency hopping unit belongs to one of N frequency hopping units in a time window, and the second frequency hopping unit belongs to one of the N frequency hopping units in the time window.

In an optional implementation, a last frequency hopping unit in the N frequency hopping units includes only a time unit used to transmit a reference signal; or a last frequency hopping unit in the N frequency hopping units does not include switching time.

In an optional implementation, duration of the first time unit may be predefined. For example, the first time unit may be F symbols, and F is an integer greater than or equal to 1.

In an optional implementation, F is determined based on a length of the first frequency hopping unit and/or the first switching time. For example, F satisfies: F=floor(length of the first frequency hopping unit-first switching time), where floor is rounding down; or F satisfies: F=length of the first frequency hopping unit-first switching time; or F satisfies: F=length of the first frequency hopping unit-ceil(first switching time), where ceil is rounding up. In this case, the terminal device may store the duration of the first time unit through configuration. Certainly, the duration of the first time unit may also be configured by using signaling.

Optionally, a length of the first time unit may be defined based on the switching time, so that there is sufficient time in one frequency hopping unit to complete frequency switching.

In an optional implementation, the length of the first frequency hopping unit or a periodicity of the first frequency hopping unit may be predefined, or may be determined based on one or more of the following: a processing capability of the terminal device; a storage capability of the terminal device; switching duration of the terminal device; a repetition interval of the reference signal, where the repetition interval is a time interval between two adjacent repeated transmissions; a subcarrier spacing of the reference signal; or a time interval between different hops of the reference signal.

Optionally, the length of the first frequency hopping unit or a periodicity of the first frequency hopping unit is determined based on a configuration of the reference signal.

In an optional implementation, the length of the first frequency hopping unit or the periodicity of the first frequency hopping unit is: a repetition interval of the reference signal, the repetition interval of the reference signal plus 1, or a maximum value of the repetition interval of the reference signal, where the repetition interval is a quantity of slots between two adjacent repeated transmissions.

In an optional implementation, the length of the first frequency hopping unit is a periodicity of the first frequency hopping unit.

In an optional implementation, a start location of the first frequency hopping unit in the time window is predefined, or a start location of the first frequency hopping unit in the time window is determined based on the configuration of the reference signal.

Optionally, a start location of a 1st frequency hopping unit in the time window is a start location of the time window, or there is first duration between a start location of a 1st frequency hopping unit in the time window and a start location of the time window. The first duration may be predefined or configured by using signaling.

Optionally, the first duration is related to a resource configuration of the reference signal.

Optionally, the resource configuration includes one or more of the following: a quantity of symbols, a pilot spacing, a quantity of repetitions of the reference signal, the repetition interval of the reference signal, a resource expected RSTD, or an expected RSTD uncertainty.

In an optional implementation, N is predefined; N is related to a frequency hopping capability of the terminal device; N is determined based on an effective length of the time window and the length of the first frequency hopping unit; or N is determined based on an effective length of the time window, a length of the first time unit, and the length of the first frequency hopping unit. The effective length of the time window is the time window minus switching time of the time window.

Optionally, a maximum value of N $N_{hop,max}$ satisfies: $N_{hop,max}$=floor((effective length of the time window-length of the first time unit)/length of the first frequency hopping unit)+1, where floor is rounding down; or $N_{hop,max}$ =floor(effective length of the time window/length of the first frequency hopping unit), where floor is rounding down.

In an optional implementation, the reference signal is a positioning reference signal.

In an optional implementation, a quantity of hops of the terminal device in the time window does not exceed N.

In an optional implementation, the quantity $N_{hop}$ of hops of the processing module 1510 in the time window is related to one or more of the following: N; a maximum or minimum quantity of times that a reference signal resource falls within the N frequency hopping units; a quantity of repetitions of the reference signal resource; a minimum value of the quantity of repetitions of the reference signal and N; the repetition interval of the reference signal, where the repetition interval is the time interval between two adjacent repeated transmissions; the length of the first frequency hopping unit; $N3$; a length of the time window; a length of radio frequency switching time of the time window; the start location of the first frequency hopping unit; or the length of the first time unit. A quantity of times that the reference signal resource repeatedly falls within one frequency hopping unit is 1.

In an optional implementation, $N_{hop}$ satisfies the following formula:

$$N_{hop} = min\left(\left\lfloor\frac{(P-1)\times Q}{K}\right\rfloor + 1, N_{hop,max}\right).$$

$P$ is a quantity of valid resources of the reference signal in a GAP, $Q$ is the repetition interval of the reference signal, $K$ is the length of the first frequency hopping unit, and $N_{hop,max}$ is the maximum value of the quantity of hops supported by the terminal device.

In an optional implementation, $N_{hop}$ is less than or equal to $\left\lfloor\frac{N3}{L_{per-hop}}\right\rfloor$ , and $L_{per-hop}$ is reference signal resource duration in the first time unit in the first frequency hopping unit.

In an optional implementation, $N_{hop}$ is less than or equal to $N_{hops,effect}$, and $N_{hops,effect}$ is a quantity of hops determined by the terminal device in a time window based on a resource configuration of the reference signal and radio frequency switching time.

In an optional implementation, $N_{hop}$ satisfies the following formula:

$$N_{hop} = min\left(N_{hops,effect}, \left\lfloor\frac{N3}{L_{per-hop}}\right\rfloor, N_{hop,max}\right).$$

$N_{hops,effect}$ is a quantity of hops determined by the terminal device in a time window based on a resource configuration and radio frequency switching time, and $L_{per-hop}$ is reference signal resource duration in the first time unit in the first frequency hopping unit.

In an optional implementation, $N_{hops,effect}$ is related to one or more of the following: a length of the time window, radio frequency switching time reserved in the time window, a start location of a 1st first frequency hopping unit in the time window, the length of the first frequency hopping unit, or the length of the first time unit.

In an optional implementation, $N_{hops,effect}$ satisfies the following formula:

$$N_{hops,effect} = \sum_n min(N_{rep,n}^{PRS}, N_{rep}^{max}).$$

$n$ is an $n$th hop in the time window, or $n$ indicates an $n$th frequency hopping unit; $N_{rep,n}^{PRS}$ is a quantity of repetitions of a reference signal resource that is unmuted in signal receiving time in the $n$th hop or the $n$th frequency hopping unit; and

$N_{rep}^{max}$ is related to the length of the first frequency hopping unit or a quantity of hops in a time unit.

In an optional implementation, when the length of the first frequency hopping unit is seven symbols, or the quantity of hops in the time unit is 2, $N_{rep}^{max} = 2$; or when the length of the first frequency hopping unit is not seven symbols, or the quantity of hops in the time unit is not 2, $N_{rep}^{max} = 1$.

In an optional implementation, the terminal device needs to complete measurement on a plurality of frequencies, reference signal resource duration in each time window periodicity in a reference signal resource validity periodicity is different, and a quantity $N_{hop,k,j}$ of hops of the terminal device at a $k^{th}$ frequency in a $j^{th}$ time window satisfies the following formula:

$$N_{hop,k,j} = min\left(N_{hops,effect,k,j}, N_{store,k,j}, N_{hop,max,k}\right)$$

$N_{hops,effect,k,j}$ is a quantity of hops determined by the terminal device in the $j^{th}$ time window of a $k^{th}$ frequency layer based on a configuration of the reference signal and radio frequency switching time, $N_{hop,max,k}$ is a maximum value of a quantity of hops supported by the terminal device at the $k^{th}$ frequency layer, $N_{store,k,j}$ is related to $N3$, $L_{per-hop,k,j}$, and/or $L_{per-hop,k,j,n}$, $L_{per-hop,k,j}$ is reference signal resource duration in a first time unit in a first frequency hopping unit in the $j^{th}$ time window in a reference signal resource validity periodicity $T_{available\_PRS,k}$ of the $k^{th}$ frequency layer, and $L_{per-hop,k,j,n}$ is reference signal resource duration in an $n^{th}$ frequency hopping unit/a first time unit in an $n^{th}$ hop in the $j^{th}$ time window in the reference signal resource validity periodicity $T_{available\_PRS,k}$ of the $k^{th}$ frequency layer.

Optionally, $N_{store,k,j} = \left\lceil \dfrac{N3}{L_{per-hop,k,j}} \right\rceil$, or $N_{store,k,j}$ is maximum $N_{store,k,j}$ that satisfies

$\sum_{n=1}^{N_{store,k,j}} L_{per-hop,k,j,n} \le N3$.

$L_{per-hop,k,j}$ is a maximum value of all $L_{per-hop,k,j,n}$(n=1, 2, 3, ...) in the $j^{th}$ time window in the reference signal resource validity periodicity $T_{available\_PRS,k}$ of the $k^{th}$ frequency layer; or $L_{per-hop,k,j}$ is any value of all $L_{per-hop,k,j,n}$(n=1, 2, 3, ...) in the $j^{th}$ time window in the reference signal resource validity periodicity $T_{available\_PRS,k}$ of the $k^{th}$ frequency layer; or $L_{per-hop,k,j}$ is a maximum value of all $L_{per-hop,k,j,n}$(n=1, 2, 3, ...) in all time windows in the reference signal resource validity periodicity $T_{available\_PRS,k}$ of the $k^{th}$ frequency layer.

In an optional implementation, a quantity $N_{hop,k,j}$ of hops in any time window of the $k^{th}$ frequency layer is a minimum value of all $N_{hop,k,j}$ or a minimum value of all $N_{hop,k,j}$ of the $k^{th}$ frequency layer.

In an optional implementation, an effective length $L_{available\_PRS,k}$ of the reference signal in the time window of the $k^{th}$ frequency layer satisfies:

$$L_{available\_PRS,k} = \sum_{j=1}^{J} N_{hop,k,j} * L_{per-hop,k,j} \qquad ; \qquad or$$

$$L_{available\_PRS,k} = \sum_{j=1}^{J} \sum_{n=1}^{N_{hop,k,j}} L_{per-hop,k,j,n} .$$

In an optional implementation, $K$ satisfies: $K = max(K', Q)$, where when the switching time of the terminal device in the time window is less than a preset threshold, $K'=1$; or otherwise, $K'=2$.

In an optional implementation, the maximum value of the quantity of hops supported by the terminal device is related to maximum bandwidth across hops supported by the terminal device.

In an optional implementation, the maximum value of the quantity of hops supported by the terminal device and maximum bandwidth across hops supported by the terminal device satisfy:

$$BW_{PRS,max} = N_{hop,max} \times BW_{per-hop} - \left(N_{hop,max} - 1\right) \times BW_{overlap};$$

or

$$N_{hop,max} = \left\lceil \dfrac{BW_{PRS,max} - BW_{overlap}}{BW_{per-hop} - BW_{overlap}} \right\rceil.$$

$BW_{PRS,max}$ is the maximum bandwidth across hops supported by the terminal device, $N_{hop,max}$ is the maximum value of the quantity of hops supported by the terminal device, $BW_{overlap}$ is repeated bandwidth across hops, and $BW_{per\text{-}hop}$ is maximum bandwidth that can be received by the terminal device per hop.

In an optional implementation, an effective length Lprs of the reference signal in the time window is determined based on a length of the reference signal in each frequency hopping unit and/or the quantity of hops of the terminal device in the time window.

For example, Lprs satisfies: Lprs=$N_{hop}$×Lper_hop, or Lprs=sum(Lper_hop), where Lper_hop is a length of the reference signal in each frequency hopping unit, and sum is summation.

In an optional implementation, the transceiver module 1520 is further configured to receive configuration information, where the configuration information includes one or more of the following: the length of the first frequency hopping unit, the start location of the first frequency hopping unit, the periodicity of the first frequency hopping unit, or a quantity of first frequency hopping units.

In some possible implementations, the communication apparatus 1500 can correspondingly implement behavior and functions of the network apparatus in the foregoing method embodiments, for example, implement the method performed by the network apparatus in the embodiment in FIG. 4. The communication apparatus 1500 may be a network device, or may be a component (for example, a chip or a circuit) used in the network device, or may be a chip or a chip group in the network device or a part of the chip that is configured to perform a related method function, or may be a software module that can implement the method performed by the network apparatus in FIG. 4. This is not limited. For example, the transceiver module 1520 may be configured to perform S401 in the embodiment shown in FIG. 4, and/or configured to support another process of the technology described in this specification. The processing module 1510 is configured to perform another process of the technology described in this specification.

The transceiver module 1520 is configured to send a reference signal in a first time unit in a first frequency hopping unit, where the first frequency hopping unit includes the first time unit and first switching time, the first time unit is used to transmit the reference signal, and the first time unit and the first switching time do not overlap in time domain.

In an optional implementation, the first frequency hopping unit belongs to one of N frequency hopping units in the time window.

In an optional implementation, a last frequency hopping unit in the N frequency hopping units includes only a time unit used to transmit a reference signal; or a last frequency hopping unit in the N frequency hopping units does not include switching time.

In an optional implementation, duration of the first time unit may be predefined. For example, the first time unit may be F symbols, and F is an integer greater than or equal to 1.

In an optional implementation, F is determined based on a length of the first frequency hopping unit and/or the first switching time. For example, F satisfies: F=floor(length of the first frequency hopping unit-first switching time), where floor is rounding down; or F satisfies: F=length of the first frequency hopping unit-first switching time; or F satisfies: F=length of the first frequency hopping unit-ceil(first switching time), where ceil is rounding up. In this case, the terminal device may store the duration of the first time unit through configuration. Certainly, the duration of the first time unit may also be configured by using signaling.

Optionally, a length of the first time unit may be defined based on the switching time, so that there is sufficient time in one frequency hopping unit to complete frequency switching.

In an optional implementation, the length of the first frequency hopping unit or a periodicity of the first frequency hopping unit is determined based on a configuration of the reference signal.

In an optional implementation, the length of the first frequency hopping unit or a periodicity of the first frequency hopping unit may be predefined, or may be determined based on one or more of the following: a processing capability of the terminal device; a storage capability of the terminal device; switching duration of the terminal device; a repetition interval of the reference signal, where the repetition interval is a time interval between two adjacent repeated transmissions; a subcarrier spacing of the reference signal; or a time interval between different hops of the reference signal.

In an optional implementation, the length of the first frequency hopping unit or the periodicity of the first frequency hopping unit is: a repetition interval of the reference signal, the repetition interval of the reference signal plus 1, or a maximum value of the repetition interval of the reference signal, where the repetition interval is a quantity of slots between two adjacent repeated transmissions.

In an optional implementation, the length of the first frequency hopping unit is a periodicity of the first frequency hopping unit.

In an optional implementation, a start location of the first frequency hopping unit in the time window is predefined, or a start location of the first frequency hopping unit in the time window is determined based on the configuration of the reference signal.

In an optional implementation, a start location of a $1^{st}$ frequency hopping unit in the time window is a start location of the time window, or there is first duration between a start location of a $1^{st}$ frequency hopping unit in the time window and a start location of the time window. The first duration may be predefined or configured by using signaling.

In an optional implementation, N is predefined; N is related to a frequency hopping capability of the terminal device; N is determined based on an effective length of the time window and the length of the first frequency hopping unit; or N is determined based on an effective length of the time window, a length of the first time unit, and the length of the first frequency hopping unit. The effective length of the time window is the time window minus switching time of the time window.

In an optional implementation, a maximum value $N_{hop,max}$ of N satisfies: $N_{hop,max}$=floor((effective length of the time window-length of the first time unit)/length of the first frequency hopping unit)+1, where floor is rounding down; or $N_{hop,max}$=floor(effective length of the time window/length of the first frequency hopping unit), where floor is rounding down.

In an optional implementation, the reference signal is a positioning reference signal.

In an optional implementation, the quantity $N_{hop}$ of hops of the terminal device in the time window is related to one or more of the following: N; a maximum or minimum quantity of times that a reference signal resource falls within the N frequency hopping units; a quantity of repetitions of the reference signal resource; a minimum value of the quantity of repetitions of the reference signal and N; a minimum value of a maximum quantity of hops supported by the terminal device and N; the repetition interval of the reference signal; the length of the first frequency hopping unit; N3; a length of the time window; a length of radio frequency switching time of the time window; the start location of the first frequency hopping unit; or the length of the first time unit. A quantity of times that the reference signal resource repeatedly falls within one frequency hopping unit is 1.

In an optional implementation, $N_{hop}$ satisfies the following formula:

$$N_{hop} = min\left(\left\lfloor \frac{(P-1)\times Q}{K} \right\rfloor + 1, N_{hop,max}\right).$$

P is the quantity of repetitions of the reference signal resource in the time window, Q is the repetition interval of the reference signal, K is the length of the first frequency hopping unit, and $N_{hop,max}$ is the maximum value of the quantity of hops supported by the terminal device.

In an optional implementation, $N_{hop}$ is less than or equal to $\left\lfloor \frac{N3}{L_{per-hop}} \right\rfloor$, and $L_{per-hop}$ is reference signal resource duration in the first time unit in the first frequency hopping unit.

In an optional implementation, $N_{hop}$ is less than or equal to $N_{hops,effect}$, and $N_{hops,effect}$ is a quantity of hops determined by the terminal device in a time window based on a resource configuration of the reference signal and radio frequency switching time.

In an optional implementation, $N_{hop}$ satisfies the following formula:

$$N_{hop} = min\left(N_{hops,effect}, \left\lfloor \frac{N3}{L_{per-hop}} \right\rfloor, N_{hop,max}\right).$$

$N_{hops,effect}$ is a quantity of hops determined by the terminal device in a time window based on a resource configuration and radio frequency switching time, and $L_{per-hop}$ is reference signal resource duration in the first time unit in the first frequency hopping unit.

In an optional implementation, $N_{hops,effect}$ is related to one or more of the following: a length of the time window, radio frequency switching time reserved in the time window, a start location of a 1st first frequency hopping unit in the time window, the length of the first frequency hopping unit, or the length of the first time unit.

In an optional implementation, $N_{hops,effect}$ satisfies the following formula:

$$N_{hops,effect} = \sum_n min(N_{rep,n}^{PRS}, N_{rep}^{max}).$$

n is an $n^{th}$ hop in the time window, or n indicates an $n^{th}$ frequency hopping unit; $N_{rep,n}^{PRS}$ is a quantity of repetitions of a reference signal resource that is unmuted in signal receiving time in the $n^{th}$ hop or the $n^{th}$ frequency hopping unit; and $N_{rep}^{max}$ is related to the length of the first frequency hopping unit or a quantity of hops in a time unit.

In an optional implementation, when the length of the first frequency hopping unit is seven symbols, or the quantity of hops in the time unit is 2, $N_{rep}^{max} = 2$; or when the length of the first frequency hopping unit is not seven symbols, or the quantity of hops in the time unit is not 2, $N_{rep}^{max} = 1$.

In an optional implementation, the terminal device needs to complete measurement on a plurality of frequencies, reference signal resource duration in each time window periodicity in a reference signal resource validity periodicity is different, and a quantity $N_{hop,k,j}$ of hops of the terminal device at a $k^{th}$ frequency in a $j^{th}$ time window satisfies the following formula:

$$N_{hop,k,j} = min(N_{hops,effect,k,j}, N_{store,k,j}, N_{hop,max,k}).$$

$N_{hops,effect,k,j}$ is a quantity of hops determined by the terminal device in the $j^{th}$ time window of a $k^{th}$ frequency layer based on a configuration of the reference signal and radio frequency switching time, $N_{hop,max,k}$ is a maximum value of a quantity of hops supported by the terminal device at the $k^{th}$ frequency layer, $N_{store,k,j}$ is related to $N3$, $L_{per-hop,k,j}$, and/or $L_{per-hop,k,j,n}$, $L_{per-hop,k,j}$ is reference signal resource duration in a first time unit in a first frequency hopping unit in the $j^{th}$ time window in a reference signal resource validity periodicity $T_{available\_PRS,k}$ of the $k^{th}$ frequency layer, and $L_{per-hop,k,j,n}$ is reference signal resource duration in an $n^{th}$ frequency hopping unit/a first time unit in an $n^{th}$ hop in the $j^{th}$ time window in the reference signal resource validity periodicity $T_{available\_PRS,k}$ of the $k^{th}$ frequency layer.

Optionally, $N_{store,k,j} = \left\lfloor \dfrac{N3}{L_{per-hop,k,j}} \right\rfloor$.

Optionally, $N_{store,k,j}$ is maximum $N_{store,k,j}$ that satisfies $\sum_{n=1}^{N_{store,k,j}} L_{per-hop,k,j,n} \leq N3$.

$L_{per-hop,k,j}$ is a maximum value of all $L_{per-hop,k,j,n}$ (n=1, 2, 3, ...) in the $j^{th}$ time window in the reference signal resource validity periodicity $T_{available\_PRS,k}$ of the $k^{th}$ frequency layer; or $L_{per-hop,k,j}$ is any value of all $L_{per-hop,k,j,n}$ (n=1, 2, 3, ...) in the $j^{th}$ time window in the reference signal resource validity periodicity $T_{available\_PRS,k}$ of the $k^{th}$ frequency layer; or $L_{per-hop,k,j}$ is a maximum value of all $L_{per-hop,k,j,n}$ (n=1, 2, 3, ...) in all time windows in the reference signal resource validity periodicity $T_{available\_PRS,k}$ of the $k^{th}$ frequency layer.

In an optional implementation, a quantity $N_{hop,k,j}$ of hops of the terminal device in any time window of the $k^{th}$ frequency layer is a minimum value of all $N_{hop,k,j}$ or a minimum value of all $N_{hop,k,j}$ of the $k^{th}$ frequency layer.

In an optional implementation, an effective length $L_{available\_PRS,k}$ of the reference signal in the time window of the $k^{th}$ frequency layer satisfies:

$$L_{available\_PRS,k} = \sum_{j=1}^{J} N_{hop,k,j} * L_{per-hop,k,j} \ ; \text{ or } \ L_{available\_PRS,k} = \sum_{j=1}^{J} \sum_{n=1}^{N_{hop,k,j}} L_{per-hop,k,j,n}.$$

In an optional implementation, $K$ satisfies: $K = max(K', Q)$, where when the switching time of the terminal device in the time window is less than a preset threshold, $K'=1$; or otherwise, $K'=2$.

In an optional implementation, the maximum value of the quantity of hops supported by the terminal device is related to maximum bandwidth across hops supported by the terminal device.

In an optional implementation, the maximum value of the quantity of hops supported by the terminal device and maximum bandwidth across hops supported by the terminal device satisfy:

$$BW_{PRS,max} = N_{hop,max} \times BW_{per-hop} - (N_{hop,max} - 1) \times BW_{overlap};$$

or

$$N_{hop,max} = \left\lceil \frac{BW_{PRS,max} - BW_{overlap}}{BW_{per-hop} - BW_{overlap}} \right\rceil.$$

$BW_{PRS,max}$ is the maximum bandwidth across hops supported by the terminal device, $N_{hop,max}$ is the maximum value of the quantity of hops supported by the terminal device, $BW_{overlap}$ is overlapping bandwidth across hops, and $BW_{per-hop}$ is maximum bandwidth that can be received by the terminal device per hop.

In an optional implementation, in the method provided in the first aspect and the second aspect, an effective length Lprs of the reference signal in the time window is determined based on a length of the reference signal in each frequency hopping unit and/or the quantity of hops of the terminal device in the time window.

For example, Lprs satisfies: Lprs=$N_{hop} \times$Lper_hop, or Lprs=sum(Lper_hop), where Lper_hop is a length of the reference signal in each frequency hopping unit, and sum is summation.

In an optional implementation, the transceiver module 1520 is further configured to send configuration information, where the configuration information includes one or more of the following: the length of the first frequency hopping unit, the start location of the first frequency hopping unit, the periodicity of the first frequency hopping unit, or a quantity of first frequency hopping units.

When the communication apparatus 1500 is a chip-type apparatus or circuit, the transceiver module may be an input/output circuit and/or a communication interface, and the processing module is an integrated processor, a microprocessor, or an integrated circuit.

FIG. 16 is a block diagram of a communication apparatus 1600 according to an embodiment of this application. The communication apparatus 1600 may be the network apparatus or the terminal apparatus in the foregoing embodiments. For example, the communication apparatus 1600 may be the network device or the terminal device in FIG. 1. Alternatively, the communication apparatus 1600 is a chip (system) in the network device or the terminal device. In embodiments of this application, the chip system may include a chip, or may include a chip and another discrete component. For a specific function, refer to the descriptions of the foregoing method embodiments.

The communication apparatus 1600 includes one or more processors 1601, configured to implement or support the communication apparatus 1600 in implementing functions of the terminal apparatus or the network apparatus in the method provided in embodiments of this application. For details, refer to the detailed descriptions in the method examples. Details are not described herein again. The processor 1601 may also be referred to as a processing unit or a processing module, and may implement a specific control function. The processor 1601 may be a general-purpose processor, a dedicated processor, or the like. For example, the processor 1601 includes a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to: control the communication apparatus 1600 (for example, the network apparatus or the terminal apparatus) to execute a software program and/or process data. Different processors may be independent devices, or may be integrated into one or more processors, for example, integrated into one or more application-specific integrated circuits.

In a design, the processor 1601 may include a program 1603 (which may sometimes also be referred to as code or instructions). The program 1603 may be run on the processor 1601, to enable the communication apparatus 1600 to perform the method described in the following embodiments. In another possible design, the communication apparatus 1600 includes a circuit (not shown in FIG. 16), and the circuit is configured to implement the function of the network apparatus or the terminal apparatus in the foregoing embodiments.

In a design, the communication apparatus 1600 may include one or more memories 1602. The memory 1602 stores a program 1604 (which may sometimes also be referred to as code or instructions), and the program 1604 may be run on the processor 1601, to enable the communication apparatus 1600 to perform the method described in the foregoing method embodiments, for example, the procedure shown in FIG. 4.

In a design, the processor 1601 and/or the memory 1602 may include an artificial intelligence (artificial intelligence, AI) module 1607 and an AI module 1608. The AI module is configured to implement an AI-related function. The AI module may be implemented by software, hardware, or a combination of software and hardware. For example, the AI module may include a RAN intelligent controller (RAN intelligent controller, RIC) module. For example, the AI module may be a near-real-time RIC or a non-real-time RIC.

In a possible design, the processor 1601 and/or the memory 1602 may further store data. The processor and the memory may be separately disposed, or may be integrated together.

In a possible design, the communication apparatus 1600 may further include a transceiver 1605 and/or an antenna 1606. The processor 1601 may sometimes also be referred to as a processing unit, and controls the communication apparatus 1600. The transceiver 1605 may sometimes also be referred to as a transceiver unit, a transceiver machine, a transceiver circuit, a transceiver, or the like, and is configured to implement a transceiver function of the communication apparatus through the antenna 1606.

In a possible design, the communication apparatus 1600 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1600 may include more or fewer components, some components are integrated, or some components are split. The components may be implemented by hardware, software, or a combination of the software and the hardware.

The communication apparatus in the foregoing embodiments may be a terminal device (or a network device), may be a circuit, or may be a chip used in the terminal device (or the network device), or another combined device, component, or the like that has the terminal device (or the network device). When the communication apparatus is the terminal device (or the network device), the transceiver module may be a transceiver, and may include an antenna, a radio frequency circuit, and the like, and the processing module may be a processor, for example, a CPU. When the communication apparatus is the component having the function of the terminal device (or the network device), the transceiver module may be a radio frequency unit, and the processing module may be the processor. When the communication apparatus is a chip system, the communication apparatus may be an FPGA, a dedicated ASIC, a system on a chip (system on a chip, SoC), a CPU, a network processor (network processor, NP), a DSP, a micro controller unit (micro controller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and the transceiver machine.

An embodiment of this application further provides a communication system. Specifically, the communication system includes a network device and a terminal device. For example, the communication system includes a terminal device configured to implement a function related to the terminal apparatus in FIG. 4 and a network device configured to implement a function related to the network apparatus in FIG. 4. For details, refer to related descriptions in the foregoing method embodiments. Details are not described herein again.

An embodiment of this application further provides a computer-readable storage medium, including instructions. When the instructions are run on a computer, the computer is enabled to perform the method performed by the terminal apparatus or the network apparatus in FIG. 4.

An embodiment of this application further provides a computer program product, including instructions. When the instructions are run on a computer, the computer is enabled to perform the method performed by the terminal apparatus or the network apparatus in FIG. 4.

An embodiment of this application provides a chip system. The chip system includes a processor, may further include a memory, and is configured to implement a function of the terminal apparatus or the network apparatus in the foregoing methods. The chip system may include a chip, or may include a chip and another discrete component.

To implement the functions of the communication apparatuses in FIG. 15 and FIG. 16, an embodiment of this application further provides a chip, including a processor, configured to support the communication apparatus in implementing a function of the terminal apparatus or the network apparatus in the foregoing method embodiments. In a possible design, the chip is connected to a memory, or the chip includes a memory. The memory is configured to store a computer program or instructions and data that are necessary for the communication apparatus.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, illustrative logical blocks (illustrative logical blocks) and steps (steps) described with reference to embodiments disclosed in this specification may be implemented by electronic hardware, computer software, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions in this application essentially, the part that contributes, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a RAM, a magnetic disk, or an optical disc.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1.  A communication method, comprising:

    determining a first frequency hopping unit, wherein the first frequency hopping unit comprises a first time unit and first switching time, the first time unit is used to transmit a reference signal, and the first time unit and the first switching time do not overlap in time domain; and
    receiving the reference signal in the first time unit.

2.  The method according to claim 1, wherein the first switching time is used by a terminal device to switch from a first frequency to a second frequency.

3.  The method according to claim 2, wherein receiving the reference signal in the first time unit comprises: receiving the reference signal at the first frequency in the first time unit; and
    the method further comprises: receiving the reference signal at the second frequency in a second time unit, wherein the second time unit is comprised in a second frequency hopping unit, and the second time unit is used to transmit the reference signal.

4.  The method according to claim 3, wherein the second frequency hopping unit further comprises second switching time, and the second time unit and the second switching time do not overlap in time domain.

5.  The method according to claim 2 or 3, wherein the first frequency hopping unit belongs to one of N frequency hopping units in a time window, and the second frequency hopping unit belongs to one of the N frequency hopping units in the time window.

6.  The method according to claim 5, wherein a last frequency hopping unit in the N frequency hopping units comprises only a time unit used to transmit a reference signal.

7.  The method according to any one of claims 1 to 6, wherein the first time unit is F symbols, and F is determined based on a length of the first frequency hopping unit and/or the first switching time.

8.  The method according to claim 7, wherein F satisfies:

    F=floor(length of the first frequency hopping unit-first switching time), wherein floor is rounding down;
    F=length of the first frequency hopping unit-first switching time; or
    F=length of the first frequency hopping unit-ceil(first switching time), wherein ceil is rounding up.

9.  The method according to any one of claims 1 to 8, wherein the length of the first frequency hopping unit or a periodicity of the first frequency hopping unit is determined based on one or more of the following:

    a processing capability of the terminal device;
    a storage capability of the terminal device;
    switching duration of the terminal device;
    a repetition interval of the reference signal, wherein the repetition interval is a time interval between two adjacent repeated transmissions;
    a subcarrier spacing of the reference signal; or
    a time interval between different hops of the reference signal.

10. The method according to any one of claims 1 to 8, wherein the length of the first frequency hopping unit or a periodicity of the first frequency hopping unit is determined based on a configuration of the reference signal.

11. The method according to claim 10, wherein the length of the first frequency hopping unit or the periodicity of the first frequency hopping unit is:
a repetition interval of the reference signal, the repetition interval of the reference signal plus 1, or a maximum value of the repetition interval of the reference signal, wherein the repetition interval is a quantity of slots between two adjacent repeated transmissions.

12. The method according to any one of claims 1 to 8, wherein a periodicity of the first frequency hopping unit is the length of the first frequency hopping unit.

13. The method according to any one of claims 5 to 12, wherein a start location of the first frequency hopping unit in the time window is predefined, or a start location of the first frequency hopping unit in the time window is determined based on the configuration of the reference signal.

14. The method according to claim 13, wherein a start location of a 1st frequency hopping unit in the time window is a start location of the time window, or there is first duration between a start location of a 1st frequency hopping unit in the time window and a start location of the time window.

15. The method according to claim 14, wherein the first duration is related to a resource configuration of the reference signal.

16. The method according to claim 15, wherein the resource configuration comprises one or more of the following: a quantity of symbols, a pilot spacing, a quantity of repetitions of the reference signal, the repetition interval of the reference signal, a resource expected reference signal time difference RSTD, or a resource expected reference signal time difference uncertainty expectedRSTD uncertainty.

17. The method according to any one of claims 5 to 16, wherein

N is predefined;
N is related to a frequency hopping capability of the terminal device;
N is determined based on an effective length of the time window and the length of the first frequency hopping unit, wherein the effective length of the time window is the time window minus switching time of the time window; or
N is determined based on an effective length of the time window, a length of the first time unit, and the length of the first frequency hopping unit, wherein the effective length of the time window is the time window minus switching time of the time window.

18. The method according to any one of claims 1 to 17, wherein the reference signal is a positioning reference signal.

19. The method according to any one of claims 5 to 18, wherein a quantity $N_{hop}$ of hops of the terminal device in the time window does not exceed N.

20. The method according to claim 19, wherein the quantity $N_{hop}$ of hops of the terminal device in the time window is related to one or more of the following:

N;
a maximum or minimum quantity of times that the reference signal resource falls within the N frequency hopping units, wherein a quantity of times that the reference signal resource repeatedly falls within one frequency hopping unit is 1;
a quantity of repetitions of the reference signal resource;
a minimum value of the quantity of repetitions of the reference signal and N;
a minimum value of a maximum value of a quantity of hops supported by the terminal device, N, and the quantity of repetitions of the reference signal;
the repetition interval of the reference signal, wherein the repetition interval is the time interval between two adjacent repeated transmissions;
a maximum value of the quantity of hops supported by the terminal device;
the length of the first frequency hopping unit;
N3, wherein N3 indicates a time length that is for processing the reference signal and that is supported by the terminal device;
a length of the time window;

a length of radio frequency switching time of the time window;
the start location of the first frequency hopping unit; or
the length of the first time unit.

21. The method according to claim 20, wherein $N_{hop}$ satisfies the following formula:

$$N_{hop} = min\left(\left\lfloor \frac{(P-1)\times Q}{K} \right\rfloor + 1, N_{hop,max}\right),$$

wherein
P is the quantity of repetitions of the reference signal resource in the time window, Q is the repetition interval of the reference signal, K is the length of the first frequency hopping unit, and $N_{hop,max}$ is the maximum value of the quantity of hops supported by the terminal device.

22. The method according to claim 20, wherein $N_{hop}$ is less than or equal to $\left\lfloor \frac{N3}{L_{per-hop}} \right\rfloor$, and $L_{per-hop}$ is reference signal resource duration in the first time unit in the first frequency hopping unit.

23. The method according to claim 20, wherein $N_{hop}$ is less than or equal to $N_{hops,effect}$, and $N_{hops,effect}$ is a quantity of hops determined by the terminal device in a time window based on a resource configuration of the reference signal and radio frequency switching time.

24. The method according to claim 20, wherein $N_{hop}$ satisfies the following formula:

$$N_{hop} = min\left(N_{hops,effect}, \left\lfloor \frac{N3}{L_{per-hop}} \right\rfloor, N_{hop,max}\right),$$

wherein
$N_{hops,effect}$ is a quantity of hops determined by the terminal device in a time window based on a resource configuration and radio frequency switching time, and $L_{per-hop}$ is reference signal resource duration in the first time unit in the first frequency hopping unit.

25. The method according to claim 23 or 24, wherein $N_{hops,effect}$ satisfies the following formula:

$$N_{hops,effect} = \sum_n min(N_{rep,n}^{PRS}, N_{rep}^{max}),$$

wherein

n is an $n^{th}$ hop in the time window, or n indicates an $n^{th}$ frequency hopping unit; $N_{rep,n}^{PRS}$ is a quantity of repetitions of a reference signal resource that is unmuted in signal receiving time in the $n^{th}$ hop or the $n^{th}$ frequency hopping unit; and

$N_{rep}^{max}$ is related to the length of the first frequency hopping unit or a quantity of hops in a slot.

26. The method according to any one of claims 23 to 25, wherein

when the length of the first frequency hopping unit is seven symbols, or the quantity of hops in the slot is 2, $N_{rep}^{max} = 2$; or

when the length of the first frequency hopping unit is not seven symbols, or the quantity of hops in the slot is not 2, $N_{rep}^{max} = 1$.

27. The method according to claim 20, wherein the terminal device needs to complete measurement on a plurality of frequencies, reference signal resource duration in each time window periodicity in a reference signal resource validity periodicity is different, and a quantity $N_{hop,k,j}$ of hops of the terminal device at a $k^{th}$ frequency in a $j^{th}$ time window satisfies the following formula:

$$N_{hop,k,j} = min\big(N_{hops,effect,k,j}, N_{store,k,j}, N_{hop,max,k}\big),$$

, wherein

$N_{hops,effect,k,j}$ is a quantity of hops determined by the terminal device in the $j^{th}$ time window of a $k^{th}$ frequency layer based on a configuration of the reference signal and radio frequency switching time, $N_{hop,max,k}$ is a maximum value of a quantity of hops supported by the terminal device at the $k^{th}$ frequency layer, $N_{store,k,j}$ is related to one or more of the following: N3, $L_{per-hop,k,j}$, or $L_{per-hop,k,j,n}$, $L_{per-hop,k,j}$ is reference signal resource duration in a first time unit in a first frequency hopping unit in the $j^{th}$ time window in a reference signal resource validity periodicity $T_{available\_PRS,k}$ of the $k^{th}$ frequency layer, and $L_{per-hop,k,j,n}$ is reference signal resource duration in an $n^{th}$ frequency hopping unit/a first time unit in an $n^{th}$ hop in the $j^{th}$ time window in the reference signal resource validity periodicity $T_{available\_PRS,k}$ of the $k^{th}$ frequency layer.

28. The method according to claim 27, wherein

$$N_{store,k,j} = \left\lfloor \frac{N3}{L_{per-hop,k,j}} \right\rfloor \quad ,$$

or $N_{store,k,j}$ is maximum $N_{store,k,j}$ that satisfies $\sum_{n=1}^{N_{store,k,j}} L_{per-hop,k,j,n} \leq N3$, wherein

$L_{per-hop,k,j}$ is a maximum value of all $L_{per-hop,k,j,n}$ (n=1, 2, 3, ...) in the $j^{th}$ time window in the reference signal resource validity periodicity $T_{available\_PRS,k}$ of the $k^{th}$ frequency layer; or
$L_{per-hop,k,j}$ is any value of all $L_{per-hop,k,j,n}$ (n=1, 2, 3, ...) in the $j^{th}$ time window in the reference signal resource validity periodicity $T_{available\_PRS,k}$ of the $k^{th}$ frequency layer; or
$L_{per-hop,k,j}$ is a maximum value of all $L_{per-hop,k,j,n}$ (n=1, 2, 3, ...) in all time windows in the reference signal resource validity periodicity $T_{available\_PRS,k}$ of the $k^{th}$ frequency layer.

29. The method according to any one of claims 26 to 28, wherein $N_{hops,effect,k,j}$ satisfies the following formula:

$$N_{hops,effect,k,j} = \sum_n min(N_{rep,k,j,n}^{PRS}, N_{rep}^{max}),$$

wherein

n is the $n^{th}$ hop in the time window, or n indicates the $n^{th}$ frequency hopping unit; $N_{rep,k,j,n}^{PRS}$ is a quantity of repetitions of a reference signal resource that is unmuted in signal receiving time in the $n^{th}$ hop or a first time unit in the $n^{th}$ frequency hopping unit in the $j^{th}$ time window of the $k^{th}$ frequency layer; and $N_{rep}^{max}$ is related to the length of the first frequency hopping unit or the quantity of hops in the slot.

30. The method according to claim 29, wherein a quantity $N_{hop,k,j}$ of hops of the terminal device in any time window of the $k^{th}$ frequency layer is a minimum value of all $N_{hop,k,j}$ or a minimum value of all $N_{hop,k,j}$ of the $k^{th}$ frequency layer.

31. The method according to claim 21, wherein $K$ satisfies: $K = max(K', Q)$, wherein when the switching time of the terminal device in the time window is less than a preset threshold, $K'=1$; or otherwise, $K'=2$.

32. The method according to claim 21 or 22, wherein the maximum value of the quantity of hops supported by the terminal device is related to maximum bandwidth across hops supported by the terminal device.

33. The method according to claim 23, wherein the maximum value of the quantity of hops supported by the terminal device and maximum bandwidth across hops supported by the terminal device satisfy:

$$BW_{PRS.max} = N_{hop,max} \times BW_{per-hop} - \left(N_{hop,max} - 1\right) \times BW_{overlap}; \text{ or}$$

$$N_{hop,max} = \left\lceil \frac{BW_{PRS.max} - BW_{overlap}}{BW_{per-hop} - BW_{overlap}} \right\rceil,$$

wherein
$BW_{PRS.max}$ is the maximum bandwidth across hops supported by the terminal device, $N_{hop,max}$ is the maximum value of the quantity of hops supported by the terminal device, $BW_{overlap}$ is overlapping bandwidth across hops, and $BW_{per-hop}$ is maximum bandwidth that can be received by the terminal device per hop.

34. The method according to claim 20, wherein an effective length Lprs of the reference signal in the time window is determined based on a length of the reference signal in each frequency hopping unit and/or the quantity of hops of the terminal device in the time window.

35. The method according to claim 21, wherein an effective length Lprs of the reference signal in the time window satisfies: Lprs= $N_{hop}$ ×Lper_hop, or Lprs=sum(Lper_hop), wherein Lper_hop is a length of the reference signal in each frequency hopping unit, and sum is summation.

36. The method according to any one of claims 27 to 31, wherein an effective length $L_{available\_PRS,k}$ of the reference signal in the time window of the $k^{th}$ frequency layer satisfies:

$$L_{available\_PRS,k} = \sum_{j=1}^{J} N_{hop,k,j} * L_{per-hop,k,j};$$

or

$$L_{available\_PRS,k} = \sum_{j=1}^{J} \sum_{n=1}^{N_{hop,k,j}} L_{per-hop,k,j,n}.$$

37. The method according to any one of claims 1 to 36, wherein the method further comprises:
receiving configuration information, wherein the configuration information comprises one or more of the following: the length of the first frequency hopping unit, the start location of the first frequency hopping unit, the periodicity of the first frequency hopping unit, or a quantity of first frequency hopping units.

38. A communication method, comprising:
sending a reference signal in a first time unit comprised in a first frequency hopping unit, wherein the first frequency hopping unit comprises the first time unit and first switching time, the first time unit is used to transmit the reference signal, and the first time unit and the first switching time do not overlap in time domain.

39. The method according to claim 38, wherein the method further comprises:
sending configuration information, wherein the configuration information comprises one or more of the following: a length of the first frequency hopping unit, a start location of the first frequency hopping unit, a periodicity of the first frequency hopping unit, or a quantity of first frequency hopping units.

40. The method according to claim 38 or 39, wherein the length of the first frequency hopping unit or the periodicity of the first frequency hopping unit is determined based on one or more of the following:

a processing capability of a terminal device;
a storage capability of the terminal device;
duration required by the terminal device to perform radio frequency switching;
a repetition interval of the reference signal, wherein the repetition interval is a time interval between two adjacent repeated transmissions;
a subcarrier spacing of the reference signal; or
a time interval between different hops of the reference signal.

41. The method according to any one of claims 38 to 40, wherein the length of the first frequency hopping unit or the periodicity of the first frequency hopping unit is determined based on a configuration of the reference signal.

42. The method according to claim 41, wherein the length of the first frequency hopping unit or the periodicity of the first frequency hopping unit is:

the repetition interval of the reference signal, the repetition interval of the reference signal plus 1, or a maximum value of the repetition interval of the reference signal, wherein the repetition interval is a quantity of slots between two adjacent repeated transmissions.

43. The method according to any one of claims 38 to 42, wherein the first frequency hopping unit belongs to one of N frequency hopping units in a time window, wherein

N is predefined;
N is related to a frequency hopping capability of the terminal device;
N is determined based on an effective length of the time window and the length of the first frequency hopping unit, wherein the effective length of the time window is the time window minus switching time of the time window; or
N is determined based on an effective length of the time window, a length of the first time unit, and the length of the first frequency hopping unit, wherein the effective length of the time window is the time window minus switching time of the time window.

44. A communication apparatus, comprising:

a processing module, configured to determine a first frequency hopping unit, wherein the first frequency hopping unit comprises a first time unit and first switching time, the first time unit is used to transmit a reference signal, and the first time unit and the first switching time do not overlap in time domain; and
a transceiver module, configured to receive the reference signal in the first time unit.

45. The apparatus according to claim 44, wherein the first switching time is used by the communication apparatus to switch from a first frequency to a second frequency.

46. The apparatus according to claim 45, wherein the transceiver module is specifically configured to receive the reference signal at the first frequency in the first time unit; and the transceiver module is further configured to receive the reference signal at the second frequency in a second time unit, wherein the second time unit is comprised in a second frequency hopping unit, and the second time unit is used to transmit the reference signal.

47. The apparatus according to claim 46, wherein the second frequency hopping unit further comprises second switching time, and the second time unit and the second switching time do not overlap in time domain.

48. The apparatus according to claim 45 or 46, wherein the first frequency hopping unit belongs to one of N frequency hopping units in a time window, and the second frequency hopping unit belongs to one of the N frequency hopping units in the time window.

49. The apparatus according to claim 48, wherein a last frequency hopping unit in the N frequency hopping units comprises only a time unit used to transmit a reference signal.

50. The apparatus according to any one of claims 44 to 49, wherein the first time unit is F symbols, and F is determined based on a length of the first frequency hopping unit and/or the first switching time.

51. The apparatus according to claim 50, wherein F satisfies:

F=floor(length of the first frequency hopping unit-first switching time), wherein floor is rounding down;
F=length of the first frequency hopping unit-first switching time; or
F=length of the first frequency hopping unit-ceil(first switching time), wherein ceil is rounding up.

52. The apparatus according to any one of claims 44 to 51, wherein the length of the first frequency hopping unit or a periodicity of the first frequency hopping unit is determined based on one or more of the following:

a processing capability of the communication apparatus;
a storage capability of the communication apparatus;

switching duration of the communication apparatus;
a repetition interval of the reference signal, wherein the repetition interval is a time interval between two adjacent repeated transmissions;
a subcarrier spacing of the reference signal; or
a time interval between different hops of the reference signal.

53. The apparatus according to any one of claims 44 to 52, wherein the length of the first frequency hopping unit or the periodicity of the first frequency hopping unit is:
the repetition interval of the reference signal, the repetition interval of the reference signal plus 1, or a maximum value of the repetition interval of the reference signal, wherein the repetition interval is a quantity of slots between two adjacent repeated transmissions.

54. The apparatus according to any one of claims 44 to 52, wherein the periodicity of the first frequency hopping unit is the length of the first frequency hopping unit.

55. The apparatus according to any one of claims 48 to 54, wherein a start location of the first frequency hopping unit in the time window is predefined, or a start location of the first frequency hopping unit in the time window is determined based on the configuration of the reference signal.

56. The apparatus according to claim 55, wherein a start location of a $1^{st}$ frequency hopping unit in the time window is a start location of the time window, or there is first duration between a start location of a $1^{st}$ frequency hopping unit in the time window and a start location of the time window.

57. The apparatus according to any one of claims 48 to 56, wherein

N is predefined;
N is related to a frequency hopping capability of the terminal device;
N is determined based on an effective length of the time window and the length of the first frequency hopping unit, wherein the effective length of the time window is the time window minus switching time of the time window; or
N is determined based on an effective length of the time window, a length of the first time unit, and the length of the first frequency hopping unit, wherein the effective length of the time window is the time window minus switching time of the time window.

58. The apparatus according to any one of claims 44 to 57, wherein the reference signal is a positioning reference signal.

59. The apparatus according to any one of claims 44 to 58, wherein a quantity Nhop of hops of the communication apparatus in the time window does not exceed N.

60. The apparatus according to claim 59, wherein the quantity Nhop of hops of the communication apparatus in the time window is related to one or more of the following:

N;
a maximum or minimum quantity of times that the reference signal resource falls within the N frequency hopping units, wherein a quantity of times that the reference signal resource repeatedly falls within one frequency hopping unit is 1;
a quantity of repetitions of the reference signal resource;
a minimum value of the quantity of repetitions of the reference signal and N; or
a minimum value of a maximum value of a quantity of hops supported by the terminal device, N, and the quantity of repetitions of the reference signal.

61. The apparatus according to claim 60, wherein an effective length Lprs of the reference signal in the time window is determined based on a length of the reference signal in each frequency hopping unit and/or the quantity of hops of the communication apparatus in the time window.

62. The apparatus according to claim 61, wherein the effective length Lprs of the reference signal in the time window satisfies:
Lprs=Nhop×Lper_hop, or Lprs=sum(Lperhop), wherein Lper_hop is the length of the reference signal in each frequency hopping unit, and sum is summation.

**63.** The apparatus according to any one of claims 44 to 62, wherein the transceiver module is further configured to: receive configuration information, wherein the configuration information comprises one or more of the following: the length of the first frequency hopping unit, the start location of the first frequency hopping unit, the periodicity of the first frequency hopping unit, or a quantity of first frequency hopping units.

**64.** A communication apparatus, comprising:

a transceiver module, configured to send a reference signal in a first time unit comprised in a first frequency hopping unit, wherein the first frequency hopping unit comprises the first time unit and first switching time, the first time unit is used to transmit the reference signal, and the first time unit and the first switching time do not overlap in time domain; and
a processing module, configured to determine the first time unit.

**65.** The apparatus according to claim 64, wherein the transceiver module is further configured to: send configuration information, wherein the configuration information comprises one or more of the following: a length of the first frequency hopping unit, a start location of the first frequency hopping unit, a periodicity of the first frequency hopping unit, or a quantity of first frequency hopping units.

**66.** The apparatus according to claim 64 or 65, wherein the length of the first frequency hopping unit or the periodicity of the first frequency hopping unit is determined based on one or more of the following:

a processing capability of a terminal device;
a storage capability of the terminal device;
duration required by the terminal device to perform radio frequency switching;
a repetition interval of the reference signal, wherein the repetition interval is a time interval between two adjacent repeated transmissions;
a subcarrier spacing of the reference signal; or
a time interval between different hops of the reference signal.

**67.** The apparatus according to any one of claims 64 to 66, wherein the length of the first frequency hopping unit or the periodicity of the first frequency hopping unit is:
the repetition interval of the reference signal, the repetition interval of the reference signal plus 1, or a maximum value of the repetition interval of the reference signal, wherein the repetition interval is a quantity of slots between two adjacent repeated transmissions.

**68.** The apparatus according to any one of claims 64 to 67, wherein the first frequency hopping unit belongs to one of N frequency hopping units in a time window, wherein

N is predefined;
N is related to a frequency hopping capability of the terminal device;
N is determined based on an effective length of the time window and the length of the first frequency hopping unit, wherein the effective length of the time window is the time window minus switching time of the time window; or
N is determined based on an effective length of the time window, a length of the first time unit, and the length of the first frequency hopping unit, wherein the effective length of the time window is the time window minus switching time of the time window.

**69.** A communication apparatus, comprising a processor, wherein the processor is configured to execute one or more computer programs or instructions, so that the communication apparatus performs the method according to any one of claims 1 to 37 or the method according to any one of claims 38 to 43.

**70.** A communication system, comprising a first communication apparatus and a second communication apparatus, wherein the first communication apparatus is configured to perform the method according to any one of claims 1 to 37, and the second communication apparatus is configured to perform the method according to any one of claims 38 to 43.

**71.** A computer-readable storage medium, wherein the computer-readable storage medium stores a computer program or instructions, and the computer program or the instructions are used to implement the method according to any one of claims 1 to 37 or the method according to any one of claims 38 to 43.

**72.** A computer program product, wherein the computer program product comprises a computer program, and when the computer program runs a computer, the computer is enabled to perform the method according to any one of claims 1 to 37 or the method according to any one of claims 38 to 43.

FIG. 1

FIG. 2

Slot 0 | Slot 1

| 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

Switching
time

(a)

Slot 0 | Slot 1

| 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

Switching
time

(b)

FIG. 3

400

| Terminal apparatus | | Network apparatus |

S401: Send a reference signal in a first time
unit in a first frequency hopping unit

S402: Determine the first
frequency hopping unit, and
receive the reference signal in
the first time unit

FIG. 4

First frequency hopping unit | Second frequency hopping unit | Third frequency hopping unit

First time unit | First switching time | Second time unit | Second switching time | Third time unit

Radio frequency switching time of the time window

Time window

FIG. 5

First frequency hopping unit | Second frequency hopping unit | Third frequency hopping unit

First time unit | Second switching time | Second time unit | Third switching time | Third time unit

Radio frequency switching time of the time window

Time window

FIG. 6

First frequency hopping unit | First switching time | Second frequency hopping unit | Second switching time | Third frequency hopping unit

First time unit | | Second time unit | | Third time unit

Radio frequency switching time of the time window

Time window

FIG. 7

FIG. 8

FIG. 9

FIG. 10

First frequency
hopping unit

Second frequency
hopping unit

Third frequency
hopping unit

First time
unit

First
switching
time

Second time
unit

Second
switching
time

Third time
unit

Third
switching
time

...

Time window

■ Radio frequency switching time of the time window

▨ Reference signal resource from a cell 1

▧ Reference signal resource from a cell 2

▨ Reference signal resource from a cell 3

FIG. 11

FIG. 12

EP 4 746 360 A1

FIG. 13

EP 4 746 360 A1

FIG. 14

EP 4 746 360 A1

FIG. 15

FIG. 16

## INTERNATIONAL SEARCH REPORT

| International application No. |
| --- |
| **PCT/CN2024/108548** |

### A. CLASSIFICATION OF SUBJECT MATTER

H04L27/26(2006.01)i

According to International Patent Classification (IPC) or to both national classification and IPC

### B. FIELDS SEARCHED

Minimum documentation searched (classification system followed by classification symbols)

IPC:H04B,H04L

Documentation searched other than minimum documentation to the extent that such documents are included in the fields searched

Electronic data base consulted during the international search (name of data base and, where practicable, search terms used)

CNKI, VEN, EXTXTC, WPABS, CNTXT, 3GPP: 完整, 整个, 打断, 重叠, 交叉, 重合, 参考信号, PRS, SRS, 切换, 调频, 重调, 时间, 跳频, full, whole, interrupted, overlapping, crossover, coincident, reference signal, switch+, frequency, modulation, time, hopping

### C. DOCUMENTS CONSIDERED TO BE RELEVANT

| Category* | Citation of document, with indication, where appropriate, of the relevant passages | Relevant to claim No. |
| --- | --- | --- |
| X | CN 113709078 A (INSTITUTE OF COMPUTING TECHNOLOGY, CHINESE ACADEMY OF SCIENCES) 26 November 2021 (2021-11-26) description, paragraphs [0003]-[0031] | 1-20, 34, 37-72 |
| X | CN 115173889 A (VIVO COMMUNICATION TECHNOLOGY CO., LTD.) 11 October 2022 (2022-10-11) description, paragraphs 69-185 | 1-20, 34, 37-72 |
| X | CN 113395714 A (CHINA TELECOM CORP., LTD.) 14 September 2021 (2021-09-14) description, paragraphs 71-105 | 1-20, 34, 37-72 |
| A | US 2018097596 A1 (QUALCOMM INC.) 05 April 2018 (2018-04-05) entire document | 1-72 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **29 October 2024** | **06 November 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/108548**

| Patent document cited in search report | | | Publication date (day/month/year) | Patent family member(s) | | | Publication date (day/month/year) |
|---|---|---|---|---|---|---|---|
| CN | 113709078 | A | 26 November 2021 | None | | | |
| CN | 115173889 | A | 11 October 2022 | WO | 2022194056 | A1 | 22 September 2022 |
| CN | 113395714 | A | 14 September 2021 | None | | | |
| US | 2018097596 | A1 | 05 April 2018 | US | 2021376983 | A1 | 02 December 2021 |
| | | | | TW | 201817271 | A | 01 May 2018 |
| | | | | WO | 2018064537 | A1 | 05 April 2018 |

Form PCT/ISA/210 (patent family annex) (July 2022)

**REFERENCES CITED IN THE DESCRIPTION**

**Patent documents cited in the description**

- CN 202310980659
- CN 202311288117X

- CN 202411025343